# EUROPEAN PATENT APPLICATION

(11) **EP 3 059 574 A1**
(43) Date of publication of application: **24.08.2016**
(21) Application number: 14854271.5
(22) Date of filing: 09.10.2014
(51) Int. Cl.: G01N 21/47, G01N 21/59

(54) **OPTICAL MEASUREMENT DEVICE AND DEVICE PROVIDED WITH OPTICAL SYSTEM**

(30) Priority: 15.10.2013 JP 2013214920
(71) Applicant: National Institute Of Advanced Industrial Science, Tokyo 100-8921 (JP)
(72) Inventor: KAWATE, Etsuo, Tsukuba-shi, Ibaraki 305-8568 (JP)
(74) Representative: Palacci, Jeremie
(86) International application number: PCT/JP2014/077088
(87) International publication number: WO 2015/056628

(57) **Abstract**

A device including an optical measuring device and an optical system which can measure the light intensity of the scattered light from the sample and the spatial distribution of the scattered light and which is excellent in the sensitivity is provided. In the device, the image distortion is suppressed by providing such a structure that the light emitted from the first substance is reflected by the ellipsoidal mirror two or more even times before reaching the second substance. The image distortion is suppressed by arranging two ellipsoidal mirrors so that respective one focuses are set to a common focus while remaining other two focuses are arranged on one line so as to be opposite to each other across the common focus, setting the common focus to a blank, arranging a first substance on one of the focuses, and arranging a second substance on the other of the focuses.

## Description

### TECHNICAL FIELD

The present invention relates to an optical measuring device and a device having an optical system. The present invention relates to, for example, a highly sensitive optical measuring device that emits light from a measurement object such as a sample and that can measure the intensity and spatial distribution of scattered light from the sample, an optical measuring device having a light-condensing system structure for Raman spectroscopy, luminescence spectroscopy, etc., and an optical device that uses a catoptric system as an imaging system or light-condensing system.

### BACKGROUND ART

In recent years, an improvement in the measurement accuracy of an optical property inspection device has been desired in an accurate measurement field. In consideration of interactions between light and a substance caused when the light enters the substance, the interactions can be classified into five types of regular reflection, diffusion reflection, (regular) transmission, diffusion transmission, and light absorption in the substance. Specifically, reflection and transmission phenomena include regular reflection in which an incident angle and a reflection angle are equal to each other, (regular) transmission in which an incident angle and an angle of transmitted light are equal to each other, and scattering in which reflected light and transmitted light are created in a wide space with respect to one incident angle (phenomenon obtained by combination of the diffusion reflection and the diffusion transmission).

Conventionally, a relative reflectance and an absolute reflectance are measured by using different accessories for separately measuring a regular reflectance and a (regular) transmittance. This measuring method has a disadvantage that measurement accuracies of respective measurement amounts are different from each other. In order to solve this problem, the present inventor has developed a device in which transmittance measurement and reflectance measurement are combined with each other (see Patent Document 4).

In attention to light-scattering phenomena caused by a substance, such scattering phenomena include absolute scattering in which light is uniformly scattered into the entire space (4π space) and partial scattering in which light is scattered into a specific partial space. An example of the absolute scattering which is the former is observed in loosely packed fine powder, and an example of the latter can be observed in daily life so often. For example, the examples are a tile, a painted surface, a cloth (warp and weft), a paper surface (where the fibers of the paper are meshed), etc. Regular reflection/ (regular) transmission phenomena can be regarded as ultimate limit of "the specific partial space" in the partial scattering. As seen also from these examples, it is required to measure both total spherical scatter (TSS) and scattering anisotropy (BSDF: Bidirectional Scatter Distribution Function).

In the field of optical measurement of light scattering from a sample, a scatterometer using a semi-spheroidal mirror has been studied. Also, a scatterometer using an integrating sphere and a scatterometer using a gonio-reflectometer are known in this field. Further, a scatterometer using an imaging hemisphere and a scatterometer using two ellipsoidal mirrors (which scatterometer is referred to as a Segal-type scatterometer) are also known (see Patent Document 2).

The present inventor has developed an optical measuring device by proposing a structure of a bi-elliptical type optical system. The present inventor has developed a device that measures an absolute reflectance and an absolute transmittance by using an optical system structured by combining two spheroidal mirrors (see Patent Document 4). This device includes a bi-ellipsoidal mirror formed of two spheroidal mirrors, and arranges two beam switching mirrors and a sample at each focus.

Also, the inventor has developed a device capable of rotating a light-receiving side spheroidal mirror having the bi-elliptical type optical system structure by a predetermined angle and of rotating a beam switching mirror placed at a focus of the spheroidal mirror step by a minute angle, and has measured the anisotropy of scattered light (see Patent Document 3). The bi-elliptical type optical system structure is a structure in which three focuses of a common focus F0 and focuses F1 and F2 are linearly arranged in such assumption that one focus between an incident-side spheroidal mirror E1 and a light-receiving side spheroidal mirror E2 is the common focus F0 and that the remaining focuses of the spheroidal mirrors E1 and E2 are the focuses F1 and F2, respectively.

The present inventor has also developed a device that rotates the light-receiving side spheroidal mirror having the bi-elliptical type optical system structure to detect scattered light collected on a focus of the rotated spheroidal mirror, and has enabled measurement of total spherical scattering caused by a measurement object (see Patent Document 3). FIG. 26 shows the optical device of Patent Document 3. Each of first and second spheroidal mirrors making up the bi-elliptical type optical system has such a structure formed of a plate-shaped or belt-shaped member having a predetermined thickness (see Patent Document 3).

The present inventor has also developed an optical device having a quarter spheroidal mirror and a belt-shaped spheroidal mirror (see Patent Document 1). In the optical measuring device of Patent Document 1, diffuse reflection light or diffuse transmission light from a sample into a π space can be measured. FIG. 27 shows a reflection measurement arrangement of the device of Patent Document 1. When light from a light source 9 (laser light source, spectrophotometer, etc.) is led into spheroidal mirrors through a lens 8 and an incident through-hole, the light reaches a beam switching mirror (RM1 Mirror) 3. The light reflected by the beam switching mirror (RM1 Mirror) 3 is then reflected by a first spheroidal mirror (belt-shaped spheroidal mirror 11), and enters a sample 1 on a common focus. The light reflected by the sample 1 is then reflected by a second spheroidal mirror (quarter spheroidal mirror 12) and is collected on a focus, and is detected by a detector. The detector has a configuration having a hemispherical lens 4, a tapered optical fiber 5, and a CCD camera 6.

### RELATED ART DOCUMENTS

### PATENT DOCUMENTS

Patent Document 1: Japanese Patent Application Laid-Open Publication No. 2012-185121 Patent Document 2: U.S. Patent No. 5210418
Patent Document 3: Japanese Patent Application Laid-Open Publication No. 2010-276363
Patent Document 4: Japanese Patent Application Laid-Open Publication No. 2004-45065

### Non-PATENT DOCUMENT

Non-Patent Document 1: E. Kawate, M. Hain, "Study of Uncertainty Sources in Incident Angle Dependence of Regular Reflectance and Transmittance using a STAR GEM Accessory" Measurement 2013, Proceedings of the 9th International Conference, Smolencies, Slovakia, p.p. 183 to 186

### SUMMARY OF THE INVENTION

### PROBLEMS TO BE SOLVED BY THE INVENTION

It has been conventionally thought that scattered light from a sample can be measured by arranging the sample on one of two focuses included in one ellipsoidal mirror, arranging a detector on the other focus, and emitting light from the sample. Although this manner has been researched and developed, all the searches and developments have failed. Problems with a scatterometer using an ellipsoidal mirror are summarized in the following eight points.
(1) Problem that light collected on a focus is magnified (magnification problem)
(2) Problem that sensitivity of a detector is not spatially uniform
(3) Problem that sensitivity of a detector depends on an incident angle
(4) Problem that a beam is blocked by an optical element
(5) Multiple internal reflection problem (inter-reflection problem)
(6) Misalignment problem
(7) Problem that a beam is blocked by a structure
(8) Problem of incompleteness and mirror surface roughness of an ellipsoidal mirror

Among these problems, the problems (2) and (3) are problems of the detector. The problems (4) and (7) are problems on a design. The problem (8) is a problem on manufacture of the mirror. These five problems are in common to other general optical systems. The remaining problems (1), (5), and (6) among these problems will be described. In a scatterometer using an ellipsoidal mirror until the 1980s, a semi-ellipsoidal mirror has been mainly used.

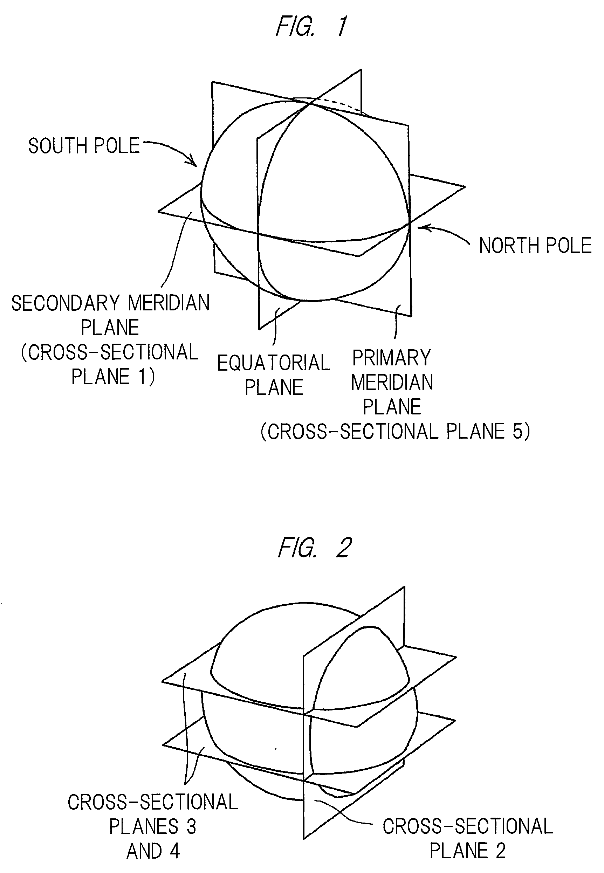

FIGs. 1 and 2 show an ellipsoidal mirror in which a through-focus axis, poles, a north pole and a south pole, a primary meridian plane, and a secondary meridian plane are defied as follows. A straight line connecting two or more focuses is the through-focus axis, and a point at which the through-focus axis intersects with the ellipsoidal mirror is referred to as pole which is the north pole or the south pole. The poles can be defined as vertexes on a major axis of the ellipsoidal mirror. A cross section which contains the through-focus axis of the ellipsoidal mirror and which cuts the ellipsoidal mirror into half is defined as the secondary meridian plane, and the surface penetrating through the north pole and the south pole while being orthogonal to the secondary meridian plane is defined as the primary meridian plane. The ellipsoidal mirror has two focuses. However, positions of these focuses are not marked with anything, and therefore, it is required to obtain the focus positions by measuring the lengths of their shapes. As an accuracy of this measurement, a scale within 50 µm (see Non-Patent Document 1) is required. Therefore, measurement with an insufficient resolution causes the (6) "misalignment problem". In uncertainty measurement in the scale within 50 µm, usage of a regular vernier caliper is not enough to measure the length.

Conventionally, scattering measurement is performed by the arrangement of the sample on one focus of the semi-ellipsoidal mirror, the arrangement of the detector on another focus thereof, and light emitting from outside onto the sample. Although the scattered light from the sample is collected on the detector, the detector does not absorb 100% of the light because of reflection on a silicon photodiode, a front window of a photomultiplier tube, etc., and therefore, a part of the scattered light is reflected by the detector, and is reflected again by the ellipsoidal mirror to return to the sample. Then, the light is reflected on the sample again. This is the (5) "internal multireflection problem". It is known that, when the sample has a high reflectance, the measured reflectance of the sample in this ellipsoidal mirror is about 5% larger than the measured result using other integrating sphere, etc., because of the influence of the internal multireflection.

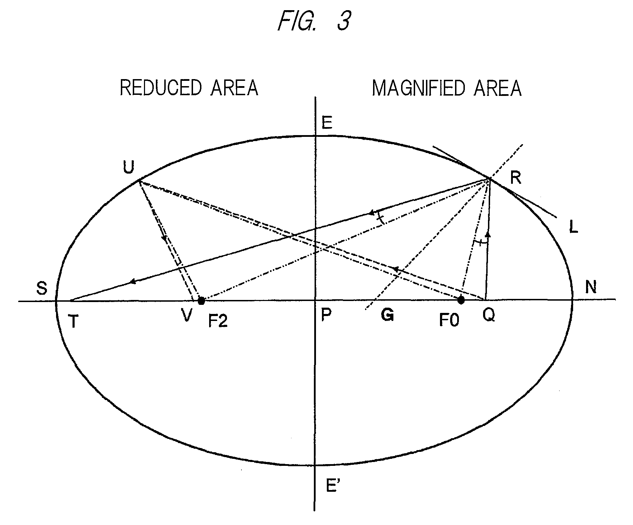

In the semi-ellipsoidal mirror, light coming out of the focus is always collected on the rest of focuses. In a practical optical system, a beam has a finite size. That is, light in vicinity of a focus exists. In a position of the collection of the light emitted in a certain direction from the vicinity of one focus, a distance of the position distant from another focus depends on an initial direction of the emission. This is the "magnification problem". FIG. 3 shows how this "magnification problem" appears. Two light beams QR and QU emitted from a point Q in vicinity of a focus F0 will be considered. The light beam QR is reflected on a right side (area including a north pole N) of an ellipse, and reaches a point T distant from a focus F2. The point T is a point at which an angle QRF0 and an angle F2RT are equal to each other. The light beam QU is reflected on a left side (area including a south pole S) of the ellipse, and reaches a point V close to the focus F2. This point V is obtained from the matter that angles are equal to each other as similar to the above description. When the zenith angles are different from each other, the light emitted from the same location in the vicinity of the focus F0 is collected on different locations with different distances in the vicinity of the focus F2. As clearly seen from FIG. 3, the reflection on the ellipsoidal mirror close to the emission point Q (reflection on a magnification area) magnifies an image, and the reflection on the ellipsoidal mirror distant from the emission point Q (reflection on a reduced area) reduces the image. A boundary surface therebetween is a surface (EPE') including the center (P) of the ellipse and the minor axis of the same.

In the semi-ellipsoidal mirror, when a parallel beam with a diameter of 2 mm enters the first focus (F0) on the primary meridian plane, the size of the beam at the second focus (F2) on the secondary meridian plane has been calculated. The calculation result indicates that it is required to make a detector to be placed at the second focus to be infinitely large in order to receive all light beams (light beams emitted in all directions from the first focus).

For conventional measurement of a total hemispherical reflectance (transmittance) and a spatial light distribution, an integrating sphere and a gonio-reflectometer are used. For measurement of a total hemispherical reflectance and total hemispherical transmittance, an integrating sphere is used. In the measurement using the integrating sphere, while fixing a light source and rotating the integrating sphere around a vertical axis, light is caused to travel from a sample exposure port to irradiate the sample with the light, so that an output (Is) from the detector at this time is measured, and light is caused to travel from a reference port to irradiate a reference sample with the light, so that an output (Ir) from the detector at this time is measured. The total hemispherical reflectance (R) of the sample is obtained by this equation "R=Is/Ir".

For the measurement of the spatial light distribution (bidirectional reflectance distribution function), a gonio-reflectometer is used. In the gonio-reflectometer, when a sample exists, a light source and a detector are moved independently of each other in a space while the sample is irradiated with the incident light from the light source, so that detector outputs (θL, φL, θD, φD) at the respective points are measured. Note that the reference characters θL, φL, θD, and φD represent a zenith angle of the light source, an azimuth angle of the light source, a zenith angle of the detector, and an azimuth angle of the detector, respectively. Next, when no sample exists, a detector output Q0 with respect to a total incident light quantity is measured while the light source and the detector are set opposite to each other. The BRDF (bidirectional reflectance distribution function) representing the spatial light distribution is obtained as follows. BRDF= Is (θL, φL, θD, φD)/Q0

Currently, a device capable of measuring the total hemispherical reflectance and the spatial light distribution at once is unavailable. Also, the total hemispherical reflectance can be obtained by measuring the BRDF (bidirectional reflectance distribution function) of the sample in the entire space by a gonio-reflectometer, and 0 integrating the measured values. However, this manner arises a problem of an extremely long measurement time.

The ellipsoidal mirror what the present inventor has already proposed will be described in detail with reference to drawings.

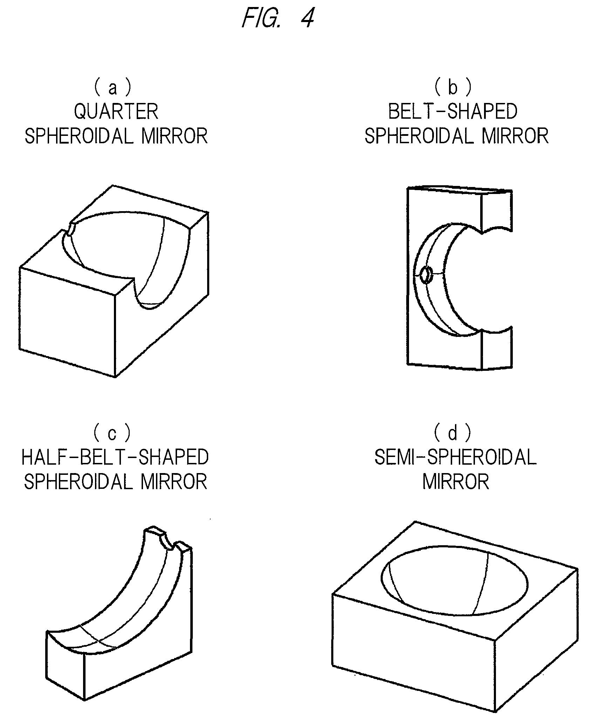

FIGs. 1 and 2 show each surface and cross-sectional plane of the ellipsoidal mirror and others. The present inventor has already proposed the semi-(spheroidal) elliptical (ellipsoidal) mirror (FIG. 4(d)) obtained by cutting the ellipsoidal mirror along the secondary meridian plane (cross-sectional plane 1 in FIG. 1) including two focuses, and a quarter (spheroidal) elliptical (ellipsoidal) mirror (FIG. 4(a)) obtained by cutting the ellipsoidal mirror so as to pass through one focus and to be perpendicular to the major axis (cross-sectional plane 2 in FIG. 2) (see Patent Document 1). The cross-sectional plane 2 of FIG. 2 can be also referred to as such a focus orthogonal plane as being perpendicular to the major axis connecting two focuses and passing through one focus.

Also, the present inventor has also proposed a belt-shaped (spheroidal) elliptical (ellipsoidal) mirror (FIG. 4(b)) obtained by cutting the ellipsoidal mirror along two parallel planes (cross-sectional planes 3 and 4 in FIG. 2) which are equally distant from the focus-connecting surface (secondary meridian plane) and further cutting the cut shape so as to pass through one focus and to be perpendicular to the major axis (cross-sectional plane 2 in FIG. 2) (see Patent Documents 1, 3, and 4). FIG. 4(c) shows a half-belt-shaped (spheroidal) elliptical (ellipsoidal) mirror obtained by cutting the belt-shaped (spheroidal) elliptical (ellipsoidal) mirror along the primary meridian plane (cross-sectional plane 5 in FIG. 1).

The Patent Document 3 has a low possibility of the problem (5) "internal multireflection problem" (that the reflected light from the detector returns to the sample) because the belt-shaped spheroidal mirror is used on the light-collecting side. However, it is required to measure both the total hemispherical reflectance (transmittance) and the spatial light distribution (anisotropy) so as to attach different detectors to this device, and therefore, the measurement has a disadvantage in a lot of time and effort and in that the measurement time cannot be shortened.

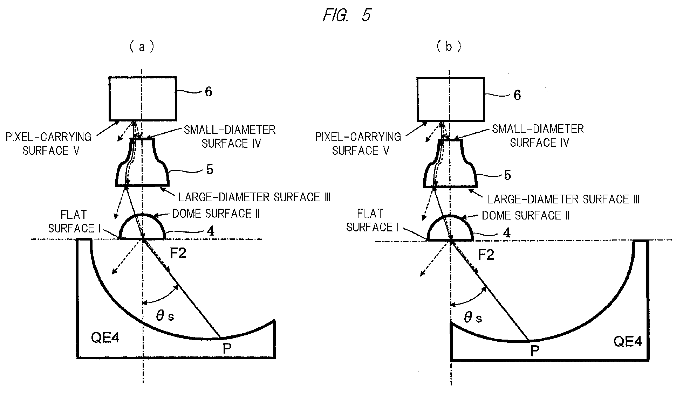

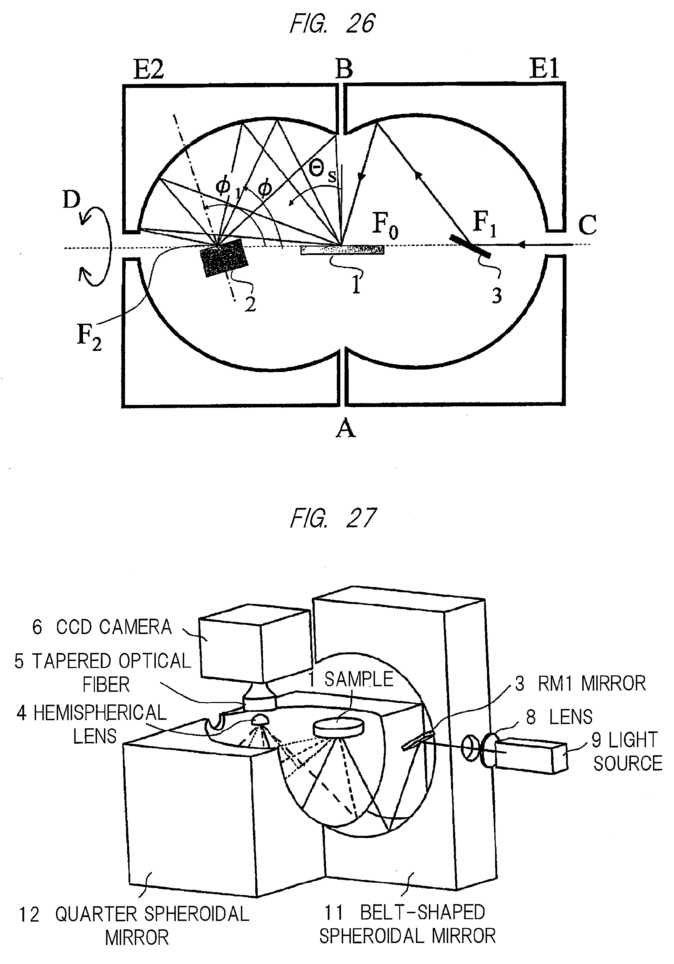

In the Patent Document 1, the quarter spheroidal mirror is used on the light-collecting side as shown in FIG. 27, and therefore, there is a problem that the return of the reflected light from a flat surface of a hemispherical lens to the sample cannot be avoided. FIG. 5 is a diagram for explaining a possibility of the return light (reflected light) from a detection system. Also, the Patent Document 1 also has a problem that an image captured by a CCD camera is distorted.

An object of the present invention is to solve these problems, and mainly solve the above-described problem (1) that the light collected on the focus is magnified (magnification problem), the above-described problem (5) the internal multireflection problem (inter-reflection problem), and the above-described problem (6) misalignment problem. Another object of the present invention is to solve the above-described problems (1) to (8). Still another object of the present invention is to provide an optical measuring device capable of measuring the reflectance and the transmittance with the same measurement accuracy as each other. Still another object of the present invention is to provide an optical measuring device capable of measuring both the total hemispherical reflectance and the spatial light distribution at once. Still another object of the present invention is to reduce the distortion of the light distribution measured by the spatial light distribution measurement. Still another object of the present invention is to separate the total hemispherical reflectance into a regular reflection component, a diffusion reflection component, and a mixed reflection component.

### MEANS FOR SOLVING THE PROBLEMS

In order to achieve the above-described objects, the present invention has the following features.

An optical measuring device of the present invention includes a feature with a structure in which light emitted from a first substance is reflected by an ellipsoidal mirror even times which are two or larger before reaching a second substance. An optical measuring device of the present invention includes a feature in which one focuses of two ellipsoidal mirrors are set to a common focus, in which the remaining two focuses are arranged on one line so as to be opposite to each other across the common focus, and in which the first substance and the second substance are arranged on one of the focuses and the other, respectively, while the common focus is blank. Also, the optical measuring device of the present invention includes a feature in which each of the two ellipsoidal mirrors is an ellipsoidal mirror having either one or both of a meridian plane and a focus orthogonal plane perpendicular to a major axis.

An optical measuring device of the present invention is an optical measuring device including a first ellipsoidal mirror and a second ellipsoidal mirror, has features in which each of the first ellipsoidal mirror and second ellipsoidal mirror has a meridian plane including two focuses and has such a focus orthogonal plane as being perpendicular to a major axis connecting the two focuses of the ellipse and as passing through one focus, and in which, when a focus distant from a vertex on the major axis of the ellipsoidal mirror is set to a first focus and a focus close to the vertex is set to a second focus, the second focus of the first ellipsoidal mirror and the second focus of the second ellipsoidal mirror are arranged so as to coincide with each other to form a first common focus, and in which the first focus of the first ellipsoidal mirror and the first focus of the second ellipsoidal mirror not coinciding with each other and the first common focus are arranged on a straight line. An optical measuring device of the present invention is an optical measuring device including a first spheroidal mirror and a second spheroidal mirror, and has features in which each of the first spheroidal mirror and second spheroidal mirror has a meridian plane including two focuses and has such a focus orthogonal plane as being perpendicular to a major axis connecting the two focuses of the ellipse and as passing through one focus, and in which, when a focus distant from a vertex on the major axis of the spheroidal mirror is set to a first focus and a focus close to the vertex is set to a second focus, the second focus of the first spheroidal mirror and the second focus of the second spheroidal mirror are arranged so as to coincide with each other to form a first common focus, and in which the first focus of the first spheroidal mirror and the first focus of the second spheroidal mirror not coinciding with each other and the first common focus are arranged on a straight line. In the optical measuring device of the present invention, the spheroidal mirror is, for example, a quarter spheroidal mirror or half-belt-shaped spheroidal mirror. In the optical measuring device of the present invention, for example, a sample is placed on the first focus of the second spheroidal mirror, and light is incident to the sample, so that light collected on the first focus of the first spheroidal mirror is detected.

An optical measuring device of the present invention is an optical measuring device including a first spheroidal mirror, a second spheroidal mirror, a third spheroidal mirror, and a fourth spheroidal mirror, and has features in which each of the third spheroidal mirror and fourth spheroidal mirror has a meridian plane including two focuses and has such a focus orthogonal plane as being perpendicular to a major axis connecting the two focuses of the ellipse and as passing through one focus, in which, when a focus distant from a vertex on the major axis of the spheroidal mirror is set to a third focus and a focus close to the vertex is set to a fourth focus, the fourth focus of the third spheroidal mirror and the fourth focus of the fourth spheroidal mirror are arranged so as to coincide with each other to form a second common focus, in which the third focus of the third spheroidal mirror and the first focus of the first or second spheroidal mirror are arranged so as to coincide with each other to form a third common focus, and in which all focuses are arranged on a through-focus axis so as to be on a straight line. In the optical measuring device of the present invention, for example, a sample is arranged on the third common focus, and light collected on the first focus of the first or second spheroidal mirror is detected, and besides, light collected on the third focus of the fourth spheroidal mirror is detected. In the optical measuring device of the present invention, for example, light is incident to the third focus of the fourth spheroidal mirror, and irradiates a sample arranged on the third common focus, so that light collected on the first focus of the first or second spheroidal mirror is detected. For example, each of the first and second spheroidal mirrors is a quarter spheroidal mirror, and each of the third and fourth spheroidal mirrors is a half-belt-shaped spheroidal mirror. Also, for example, each of all the first, second, third, and fourth spheroidal mirrors is a half-belt-shaped spheroidal mirror. Further, for example, the third and fourth spheroidal mirrors can be rotated around the through-focus axis with respect to the first and second spheroidal mirrors.

A device of the present invention is a device including a first ellipsoidal mirror and a second ellipsoidal mirror, the device has a feature to include an optical system in which each of the first ellipsoidal mirror and second ellipsoidal mirror has a meridian plane including two focuses and such a focus orthogonal plane as being perpendicular to a major axis connecting the two focuses of the ellipse and as passing through one focus, in which, when a focus distant from a vertex on the major axis of the ellipsoidal mirror is set to a first focus and a focus close to the vertex is set to a second focus, the second focus of the first ellipsoidal mirror and the second focus of the second ellipsoidal mirror are arranged so as to coincide with each other to form a first common focus, and in which the first focus of the first ellipsoidal mirror and the first focus of the second ellipsoidal mirror not coinciding with each other and the first common focus are arranged on a straight line. The ellipsoidal mirror is, for example, a spheroidal mirror, etc. The ellipsoidal mirrors have the same shape. The device having the optical system of the present invention is a device in which two ellipsoidal mirrors are arranged so that one focuses of them are set to a common focus while the remaining other two focuses are arranged on a line so as to be opposite to each other across the common focus, and in which an image at one focus is formed as an erect image at another focus. For example, the device is applicable to a tip part of an exposure device, a tip part of a microscopic device, etc. The device having the optical system of the present invention is an optical device in which two ellipsoidal mirrors are arranged so that each focus of them is set to a common focus while the remaining other two focuses are arranged on a line so as to be opposite to each other across the common focus, in which a diaphragm is provided on the common focus or one of the remaining two focuses, and in which a recording unit is provided on the another focus or vicinity of another focus. For example, the device can be used in place of a conventional lens system and is applicable instead of a lens system for a camera. The device having the optical system of the present invention is an optical device comprising an optical system in which two ellipsoidal mirrors are arranged so that each focus of them is set to a common focus while the remaining other two focuses are arranged on a line so as to be opposite to each other across the common focus, and in which a wide field image at one focus is formed at another focus. For example, the device is applicable instead of a mirror having a wide field of view. The device having the optical system of the present invention is applicable as a heat sensing device in which two ellipsoidal mirrors are arranged so that one focuses of them are set to a common focus while the remaining other two focuses are arranged on a line so as to be opposite to each other across the common focus, and in which incident infrared light on one focus is collected on another focus.

### EFFECTS OF THE INVENTION

By the optical measuring device of the present invention, (1) the problem of the magnification of the light collected on a focus (magnification problem), (5) the problem of the internal multireflection problem (inter-reflection problem), and (6) the misalignment problem in the scattering measurement (transmission, reflection) by the ellipsoidal mirror can be solved. Further, by the optical measuring device of the present invention, (2) the problem that the sensitivity of a detector is not spatially uniform, (3) the problem that the sensitivity of a detector depends on the incident angle, (4) the problem that the beam is blocked by the optical element, (7) the problem that the beam is blocked by the structure, and (8) the problem of the incompleteness of the ellipsoidal mirror and the mirror surface roughness can be also solved.

By using the optical measuring device of the present invention, a reflectance and a transmittance can be measured with the same measurement accuracy, and the total hemispherical reflectance and the spatial light distribution can be measured at once. By using the optical measuring device of the present invention, the distortion of the light distribution measured by spatial light distribution measurement can be reduced. By using the optical measuring device of the present invention, the total hemispherical reflectance can be separated into the regular reflection component, the diffusion reflection component, and the mixed reflection component.

The optical measuring device of the present invention has an effect of improvement in measuring accuracy as the following specific device.
(1) The optical measuring device of the present invention can achieve measurement of a spatial distribution of reflected light from a flat or curved surface of a sample, a polished surface, a rough surface, a surface having a structure such as a paper surface, a cloth surface, a skin, and others, and measurement of separation into a regular reflection component, a total diffusion reflection component, and a mixed reflection component.
(2) When the present invention is applicable as a device that checks the finish time of a cutting process and a polishing process of a metal, semiconductor, glass, etc., accurate processes can be controlled because a regular reflection (regular transmission) component increases more while a total diffusion reflection (total diffusion transmission) component and a mixed reflection (transmission) component decrease more as the process gets closer to mirror polishing.
(3) When the present invention is applicable as a device that evaluates a performance of a diffusion plate, the performance evaluation can be improved. The diffusion plate is used to uniformly radiate the light from a light source having strong directivity to a wide space. For example, the diffusion plate is used for an outdoor light, a rear projector television, a general household electronic display, etc. In a method of the performance evaluation of the diffusion plate by the device of the present invention, a diffusion plate can be evaluated to be a diffusion plate having a better performance as the regular reflection (regular transmission) component decreases more while the total diffusion component increases more.
(4) When the present invention measures the light emission distribution and light emission intensity of an LED or a LED material, performance of a product, a material, etc., can be evaluated.
(5) When the present invention is used for Raman spectroscopy, luminescence spectroscopy, the Raman spectroscopy for angular resolution, etc., can be performed by attaching one end of an optical fiber bundle to a small-diameter surface of a tapered optical fiber and guiding the other end of the bundle to a spectrometer instead of the CCD camera of a detection system.

The device having the optical system of the present invention is applicable to a tip part of an exposure system, a tip part of a microscope device, etc. Also, the device can be used in replace of a lens system of a conventional camera. Also, the device is applicable as a mirror having a wide field of view. Also, the device is applicable as, for example, a heat sensing device because of having a light-collecting function.

### BRIEF DESCRIPTIONS OF THE DRAWINGS

FIG. 1 is a diagram showing each surface and cross-sectional plane, etc., of an ellipsoidal mirror;
FIG. 2 is a diagram showing each surface and cross-sectional plane, etc., of an ellipsoidal mirror;
FIG. 3 is an explanatory diagram for a magnification problem;
FIG. 4 is diagrams of spheroidal mirrors of various shapes, FIG. 4(a) shows a quarter spheroidal mirror, FIG. 4(b) shows a belt-shaped spheroidal mirror, FIG. 4(c) shows a half-belt-shaped spheroidal mirror, and FIG. 4(d) shows a semi-spheroidal mirror;
FIG. 5 is diagrams for explaining a possibility of return light (reflected light) from a detection system;
FIG. 6 is a diagram for explaining a coupling mode of an ellipsoidal mirror;
FIG. 7 is an explanatory diagram for the ovalization of a beam diameter in the oblique incidence;
FIG. 8 is a diagram showing a result of a magnification calculation in an ellipse on the meridian plane of a case of C-C coupling of the same ellipsoidal mirrors;
FIG. 9 is a diagram showing a result of a magnification calculation in an ellipse on the meridian plane of a case of O-O coupling of the same ellipsoidal mirrors;
FIG. 10 is a cross-sectional view taken along a primary meridian plane of a scatterometer formed by coupling two compensation structures to provide O-O coupling, showing a reflection arrangement with a sample;
FIG. 11 is a cross-sectional view taken along a primary meridian plane of a scatterometer formed by coupling two compensation structures to provide O-O coupling, showing a transmission arrangement with a sample;
FIG. 12 is a cross-sectional view taken along a primary meridian plane of a scatterometer formed by coupling two basic structures of FIG 6(b) to provide C-C coupling, showing a transmission arrangement with a sample;
FIG. 13 (a) is a conceptual diagram of a (θ/π optical system) and FIG. 13(b) is a conceptual diagram of a (π/θ optical system);
FIG. 14 is a schematic diagram of an optical measuring device according to a first embodiment;
FIG. 15 is a schematic diagram of an optical measuring device according to a second embodiment;
FIG. 16 is a schematic diagram of an optical measuring device according to a third embodiment;
FIG. 17 is a schematic diagram of an optical measuring device according to a fourth embodiment;
FIG. 18 is a diagram showing an example of a detection system;
FIG. 19 is a diagram showing a method of separating a total hemispherical reflectance into a regular reflection component, a diffusion reflection component, and a mixed reflection component;
FIG. 20 is a diagram for explaining the symmetry of a compensation structure;
FIG. 21 is a diagram showing a result of calculation of magnification in a scatterometer according to the third embodiment;
FIG. 22 is a diagram showing the results of calculation of the distortion of an image that occurs due to a difference in curvature between each point of the ellipsoidal mirror;
FIG. 23 is a schematic diagram of application of an optical system according to a fifth embodiment to a semiconductor exposure device;
FIG. 24 is a schematic diagram of application of the optical system of the fifth embodiment to a microscope;
FIG. 25 is a schematic diagram of application of the optical system of the fifth embodiment instead of a lens system of a camera;
FIG. 26 is a diagram showing an optical device according to a conventional technique; and
FIG. 27 is a diagram showing the reflection measurement arrangement of the optical device according to the conventional technique.

### BEST MODE FOR CARRYING OUT THE INVENTION

Embodiments of the present invention will be described below.

In order to understand the present invention, a basic element and a basic structure of the present invention will be described first.

### (Characteristics of Basic Structure)

The basic structure is configured of two ellipsoidal mirrors, so that light emitted from a first substance is reflected twice on the ellipsoidal mirrors and reaches a second substance. At this time, one focus of a first ellipsoidal mirror configures a common focus together with one focus of a second ellipsoidal mirror. As cross-sectional planes of the ellipsoidal mirrors that enable this configuration, only a meridian plane (cross-sectional plane 1 in FIG. 1) and a focus orthogonal plane (cross-sectional plane 2 in FIG. 2) are cited. The remaining respective two focuses of the two ellipsoidal mirrors must be arranged on a straight line (through-focus axis) so as to be opposite to each other across the common focus. The common focus is blank (empty), and the first and second substances are placed on the focuses on both ends, respectively. A surface of the first substance is placed so as to be parallel or perpendicular to the meridian plane. In the parallel case, a direction in which a zenith angle of the first substance is 0 degree is within the focus orthogonal plane, and a direction in which the zenith angle of the same is 90 degrees is within the meridian plane including poles. In the perpendicular case, the direction in which the zenith angle of the first substance is 0 degree is in the poles, and the direction in which the zenith angle of the same is 90 degrees is within the focus orthogonal plane. As seen from these matters, the ellipsoidal mirror must include the pole in order to efficiently transmit the emitted light from the first substance placed on one focus to the second substance placed on another focus.

Out of two focuses of the ellipsoidal mirror including the pole, one focus close to the pole is referred to as a close focus ("Close" which is abbreviated as C focus), and the other focus distant from the pole is referred to as an open focus ("Open" which is abbreviated as O focus). However, because a semi-spheroidal mirror includes both poles, two focuses are equal to each other. At this time, in a view from the right-side pole, one focus close to the pole is referred to as a close focus ("Close" which is abbreviated as C focus), and the focus distant from the pole is referred to as an open focus ("Open" which is abbreviated as O focus) . A prefix "minor" is attached to an ellipsoidal mirror cut along a focus orthogonal plane passing through the C focus, and a prefix "major" is attached to an ellipsoidal mirror cut along a focus orthogonal plane passing through the O focus for distinguishing them from each other.

### (Structure of Basic Element)

An ellipsoidal mirror including a pole that configures the basic structure is referred to as a basic element. This basic element has five types of (1) "an ellipsoidal mirror surrounded by an ellipsoidal mirror including the pole and by the meridian plane" (meridian/pole surrounding ellipsoidal mirror group), (2) "an ellipsoidal mirror surrounded by the ellipsoidal mirror including the pole and by a major focus orthogonal plane" (major focus/pole surrounding ellipsoidal mirror group), (3) "an ellipsoidal mirror surrounded by the ellipsoidal mirror including the pole and by a minor focus orthogonal plane" (minor focus/pole surrounding ellipsoidal mirror group), (4) "an ellipsoidal mirror surrounded by the ellipsoidal mirror including the pole, by the meridian plane, and by the major focus orthogonal plane" (major meridian/focus surrounding ellipsoidal mirror group), and (5) "an ellipsoidal mirror surrounded by the ellipsoidal mirror including the pole, by the meridian plane, and by the minor focus orthogonal plane" (minor meridian/focus surrounding ellipsoidal mirror group). Next, a cutting plane is corresponded to each ellipsoidal mirror group.
(1) The meridian/pole surrounding ellipsoidal mirror group refers to one of ellipsoidal mirrors created by cutting an ellipsoidal mirror at least along the cross-sectional plane 1 of FIG. 1, may be cut further along a cross-sectional plane other than the focus orthogonal plane, and therefore, a term "group" is added at an end of the term "meridian/pole surrounding ellipsoidal mirror". Hereinafter, the term "group" is similarly added. Hereinafter, ellipsoidal mirrors as basic elements are suffixed with "group" in the same manner. (2) The major focus/pole surrounding ellipsoidal mirror group is a larger one of ellipsoidal mirrors created by cutting an ellipsoidal mirror at least along the cross-sectional plane 2 of FIG. 2, and may be cut further along a cross-sectional plane other than the meridian plane. (3) The minor focus/pole surrounding ellipsoidal mirror group is a smaller one of the ellipsoidal mirrors created by cutting the ellipsoidal mirror at least along the cross-sectional plane 2 of FIG. 2, and may be cut further along a cross-sectional plane other than the meridian plane. (4) The major meridian/focus surrounding ellipsoidal mirror group is a larger one of ellipsoidal mirrors created by cutting an ellipsoidal mirror along the cross-sectional plane 1 of FIG. 1 and the cross-sectional plane 2 of FIG. 2, and may be cut further along an additional cross-sectional plane. (5) The minor meridian/focus surrounding ellipsoidal mirror group is a smaller one of the ellipsoidal mirrors created by cutting the ellipsoidal mirror along the cross-sectional plane 1 of FIG. 1 and the cross-sectional plane 2 of FIG. 2, and may be cut further along an additional cross-sectional plane.

### (Basic Element Example)

While FIG. 4 shows some examples of basic elements in a case of a spheroidal mirror, the same goes for an ellipsoidal mirror.
(1) One example of the meridian/pole surrounding ellipsoidal mirror group is a semi-spheroidal mirror (FIG. 4(d)). (2) Two examples of the major focus/pole surrounding ellipsoidal mirror group are a belt-shaped spheroidal mirror (FIG. 4(b)) and an octopus-trap-shaped ellipsoidal mirror (illustration is omitted).
(3) One example of the minor focus/pole surrounding ellipsoidal mirror group is a hat-shaped ellipsoidal mirror (illustration is omitted). (4) Two examples of the major meridian/focus surrounding ellipsoidal mirror group are a quarter spheroidal mirror (FIG. 4 (a), which will be indicated as "QE" below) and a half-belt-shaped spheroidal mirror (FIG. 4(c), which will be indicated as "BE" below) .
(5) Two examples of the minor meridian/focus surrounding ellipsoidal mirror group are a minor quarter ellipsoidal mirror (illustration is omitted) and a minor half-belt-shaped ellipsoidal mirror (illustration is omitted).

### (Coupling Mode of Basic Element for Forming Basic Structure)

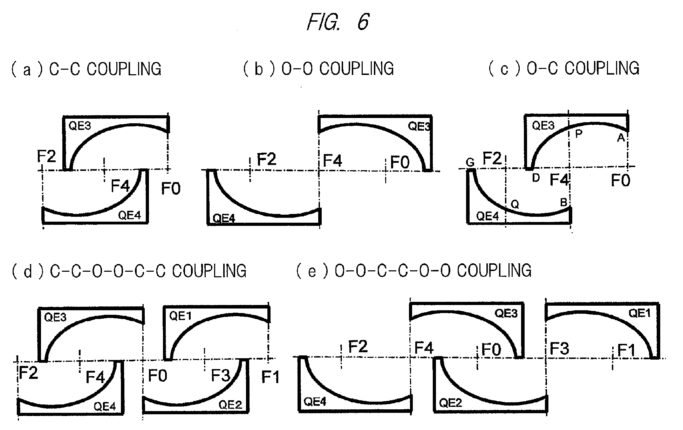

A coupling mode for forming a basic structure configured of two basic elements are shown in FIG. 6. In the drawing, a basic element denoted by QE (which stands for the quarter spheroidal mirror) can be replaced with other basic elements. F0 to F4 are focuses of the basic elements.
(I) C-C coupling: This is a coupling mode in which respective C focuses of two basic elements configure a common focus, and in which the remaining two O focuses are arranged on a straight line so as to be opposite to each other across the common focus, and this example of this coupling mode is shown in FIG. 6(a). When the two basic elements have the same shape as each other, the first basic element and the second basic element are arranged so as to be point symmetric to each other across the common focus.
(II) O-O coupling: This is a coupling mode in which respective O focuses of two basic elements configure a common focus, and in which the remaining two C focuses are arranged on a straight line so as to be opposite to each other across the common focus, and this example of this coupling mode is shown in FIG. 6(b). When the two basic elements have the same shape as each other, the first basic element and the second basic element are arranged so as to be point symmetric to each other across the common focus.
(III) C-O coupling: This is a coupling mode in which the C focus and the O focus of the two basic elements configure a common focus, and in which the remaining C focus and O focus of the two basic elements are arranged on a straight line so as to be opposite to each other across the common focus, and an example of this coupling mode is shown in FIG. 6(c). These three coupling modes are possible. Among the three coupling modes, the C-C coupling and the O-O coupling are more excellent because the C-O coupling has such a bad efficiency in transmission of the emitted light from the first substance to the second substance. A set of ellipsoidal mirrors coupled by the C-C coupling mode and the O-O coupling mode are referred to as a C-C couple and an O-O couple, respectively.

### (Type of Basic Structure)

Because the basic elements are sterically formed, two ellipsoidal mirrors hit each other or an ellipsoidal mirror is behind a counterpart ellipsoidal mirror in the O-O coupling or the C-C coupling of two basic elements. Therefore, hereinafter, counterparts which can be physically coupled with each other except for the counterparts which hit each other and which are behind each other are cited so as not to be repeated.
(1) A C-C coupling counterpart for the meridian/pole surrounding ellipsoidal mirror group are three types of the meridian/pole surrounding ellipsoidal mirror group, the major meridian/focus surrounding ellipsoidal mirror group, and the minor meridian/focus surrounding ellipsoidal mirror group. (2) A C-C coupling counterpart for the major focus/pole surrounding ellipsoidal mirror group does not exist. (3) A C-C coupling counterpart for the minor focus/pole surrounding ellipsoidal mirror group does not exist. (4) A C-C coupling counterparts for the major meridian/focus surrounding ellipsoidal mirror group are two types of the major meridian/focus surrounding ellipsoidal mirror group and the minor meridian/focus surrounding ellipsoidal mirror group. (5) A C-C coupling counterparts for the minor meridian/focus surrounding ellipsoidal mirror group is one type of the minor meridian/focus surrounding ellipsoidal mirror group. (6) An O-O coupling counterpart for the meridian/pole surrounding ellipsoidal mirror group are three types of the minor focus/pole surrounding ellipsoidal mirror group, the major meridian/focus surrounding ellipsoidal mirror group, and the minor meridian/focus surrounding ellipsoidal mirror group. (7) An O-O coupling counterpart for the major focus/pole surrounding ellipsoidal mirror group are four types of the major focus/pole surrounding ellipsoidal mirror group, the minor focus/pole surrounding ellipsoidal mirror group, the major meridian/focus surrounding ellipsoidal mirror group, and the minor meridian/focus surrounding ellipsoidal mirror group. (8) An O-O coupling counterpart for the minor focus/pole surrounding ellipsoidal mirror group are three types of the minor focus/pole surrounding ellipsoidal mirror group, the major meridian/focus surrounding ellipsoidal mirror group, and the minor meridian/focus surrounding ellipsoidal mirror group. (9) An O-O coupling counterpart for the major meridian/focus surrounding ellipsoidal mirror group are two types of the major meridian/focus surrounding ellipsoidal mirror group and the minor meridian/focus surrounding ellipsoidal mirror group. (10) An O-O coupling counterpart for the minor meridian/focus surrounding ellipsoidal mirror group is one type of the minor meridian/focus surrounding ellipsoidal mirror group.

As described above, the basic structure configured by the C-C coupling has 6 types, the basic structure configured by the O-O coupling has13 types, and therefore, the basic structure has totally 19 types.

### (Example of Basic Structure)

Some examples of 19 types of the basic structures will be descried. FIG. 6 (a) shows a C-C couple of two major meridian/focus surrounding ellipsoidal mirror groups, and the C-C couple is referred to as a compensation structure particularly when two major meridian/focus surrounding ellipsoidal mirror groups have the same shape as each other. FIG. 6(b) shows an O-O couple of two major meridian/focus surrounding ellipsoidal mirror groups.

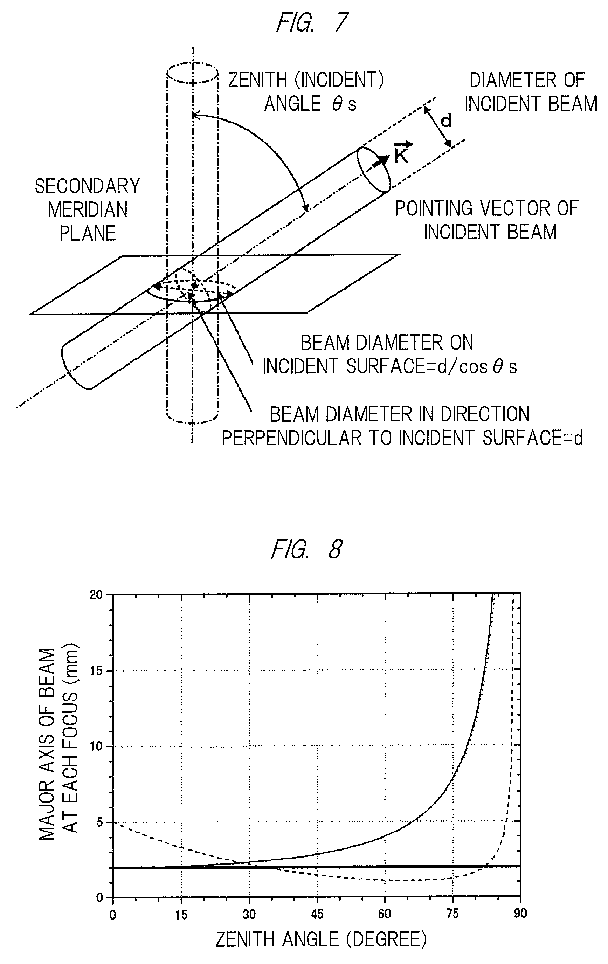

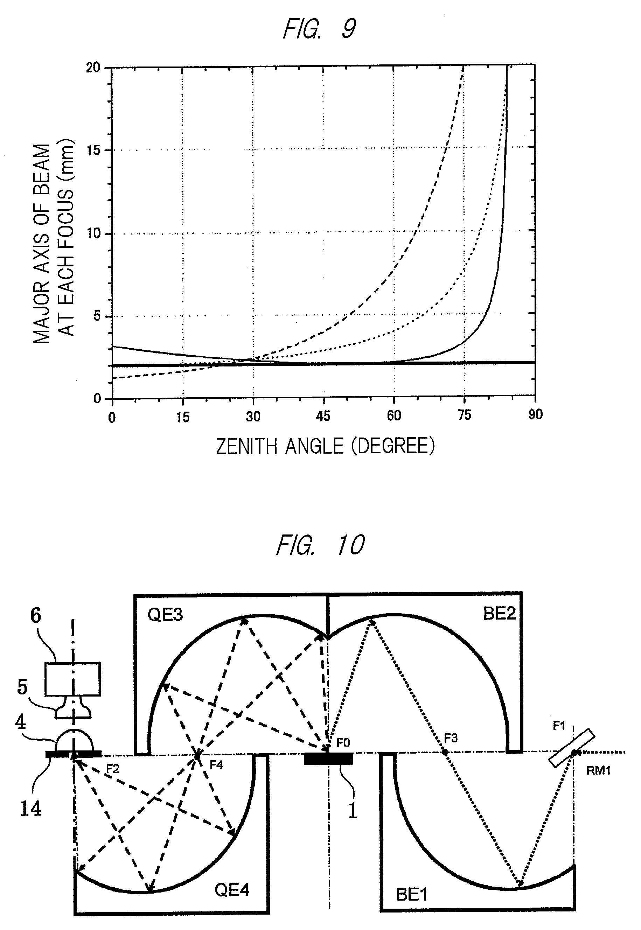

With reference to FIG. 7, the ovalization of a beam diameter caused when the beam is obliquely incident will be described. As shown in FIG. 7, when a parallel beam with a diameter of "d" mm (which is represented by a single-dot chain line column in FIG. 7) is incident on the secondary meridian plane of the ellipsoidal mirror, if the beam is vertically incident, a diameter of the beam on the secondary meridian plane is d mm that is the same. However, the beam on the secondary meridian plane, which is obliquely incident and whose zenith (incident) angle is θs, is oval in a direction of the incident surface, and a major axis of the oval is "d/cosθs" mm. On the other hand, the beam being on the secondary meridian plane and being perpendicular to the incident surface has similarly the diameter of d mm (which is referred to as a minor axis). FIGs. 8 and 9 show the results of magnification calculation in the case of the C-C couple (compensation structure) of two meridian/focus surrounding ellipsoidal mirrors having the same shape as each other and of the O-O couple of two meridian/focus surrounding ellipsoidal mirrors having the same shape as each other. FIGs. 8 and 9 show the results of calculation of the zenith angle dependency of the major axis of the parallel beam in the direction of the through-focus axis on the secondary meridian plane, which is observed when the parallel beam which is incident in parallel with the meridian plane so as to pass through the focus F0 is reflected by each spheroidal mirror and passes through each focus. A thick continuous line represents the beam diameter of 2 mm, and a dotted line represents the beam diameter at the focus F0 on the secondary meridian plane. Similarly, a broken line represents the major axis of the beam at a focus F4, and a continuous line represents the major axis of the beam at a focus F2. As a result, as shown in FIG. 8, in the C-C couple, the major axis of the beam in the oblique incidence and the major axis of the beam having been reflected on the ellipsoidal mirror twice almost equal to each other in the entire zenith angle (incident) area, and therefore, the "magnification problem" that is the problem (1) of the ellipsoidal mirror is solved. On the other hand, in the O-O couple, as shown in FIG. 9, in a relation between the major axis of the beam in the oblique incidence and the major axis of the beam having been reflected on the ellipsoidal mirror twice, increase in the beam diameter is caused in a small zenith (incident) angle (that is 28 degrees or smaller) while decrease in the beam diameter has an advantage in a large zenith (incident) angle (that is 28 degrees or larger).

In the basic structure having the C-C coupling of FIG. 6(a), the OPEN focuses appear on both ends of the basic structure. In the basic structure having the O-O coupling of FIG. 6(b), the CLOSE focuses appear on both ends of the basic structure. Therefore, in order to expand these basic structures in the direction of the incident light onto a sample, and therefore, only the O-O coupling and the C-C coupling have its possible, respectively. As a result, the C-C coupling of FIG. 6 (a) is extended into a C-C-O-O-C-C coupling shown in FIG. 6(d), and the O-O coupling of FIG. 6(b) is extended into an O-O-C-C-O-O coupling shown in FIG. 6(e). The common focuses of each of these four-coupled ellipsoidal mirrors are F3, F0, and F4. The focus F0 of these common focuses is the common focus between the two basic structures. The focuses on both ends are F1 and F2. These five focuses are arranged on a straight line, and an axis of the line is referred to as a through-focus axis. A plane passing through the focus F0 and being perpendicular to the through-focus axis is defined as an "equatorial plane" of the optical measuring device of the present invention. In the optical measuring device of the present invention, for the focuses of the couple of the ellipsoidal mirrors, a sample position is referred to the focus F0, as, a light source system is referred to as the focus F1, a detection system is referred to as the focus F2, and the remaining focuses are referred to as the focuses F3 and F4 in an order from the light source system to the detection system.

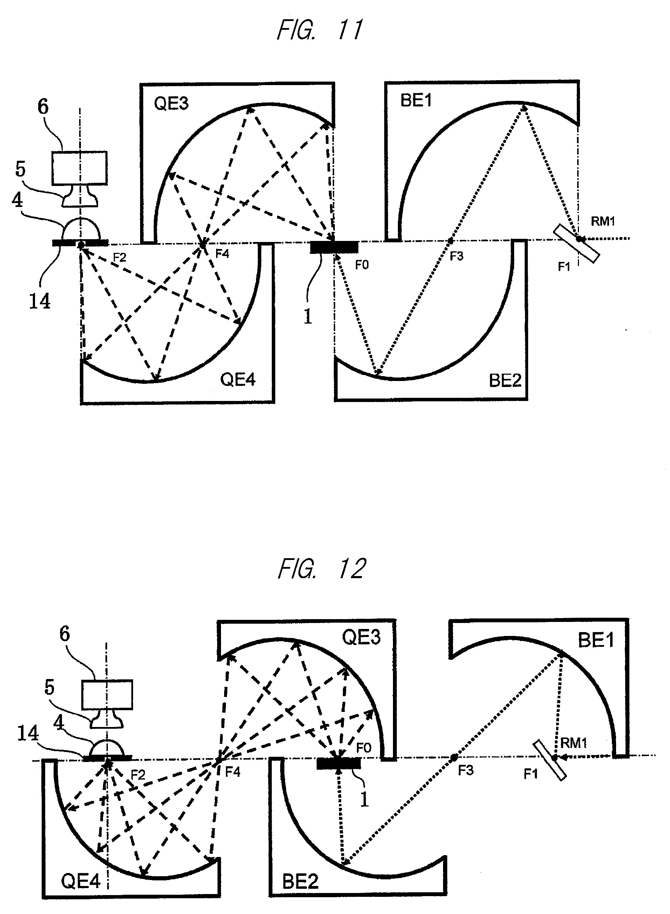

Next, it is considered that the light reflection and transmission are measured in arrangement of the sample on the focus F0 and arrangement of the light source and the detection system on the focuses F1 and F2, respectively. In the case of the arrangement of FIG. 6(d), both measurements are possible, the reflection arrangement is shown in FIG. 10, and the transmission arrangement is shown in FIG. 11. FIG. 10 is a cross-sectional plane of the primary meridian plane, and shows the reflection arrangement with the sample. A thick dotted line incident on the sample in the drawing represents the incident beam, and a broken line caused from the sample represents the scattered beam. A structure of the detector is formed of an aperture 14, a hemispherical lens 4, a tapered optical fiber 5, and a CCD camera 6. FIG. 11 is as similar to FIG. 10, and shows the transmission arrangement with the sample. Each of the reflection arrangement of FIG. 10 and the transmission arrangement of FIG. 11 is the arrangement in which one C-C couple overlaps the other the C-C couple by rotation of one C-C couple with respect to the other C-C couple by 180 degrees while the equatorial plane is set to a rotation plane around the through-focus axis.

Meanwhile, the O-O-C-C-O-O coupling structure of FIG. 6(e) is shown in FIG. 12. FIG. 12 is a cross-sectional view similar to the cross-sectional view of FIG. 10, and shows the transmission arrangement with the sample. However, when the rotation of one O-O couple around the through-focus axis with respect to the other O-O couple is attempted, the ellipsoidal mirror BE2 and the ellipsoidal mirror QE3 hit each other, and therefore, the reflection cannot be measured.

FIG. 5 is diagrams for explaining a possibility of the return light (reflected light) from the detection system. FIG. 5 is cross-sectional views along the primary meridian plane, and the reflected light (return light) is indicated by a dotted line. In FIG. 6(e) and FIG. 12 in which the detection system is practically arranged, the reflected light from the flat surface of the hemispherical lens of the detection system returns to the ellipsoidal mirror QE4. This situation is shown in FIG. 5(a). In this structure, the internal multireflection problem (inter-reflection problem) arises. On the other hand, in the reflection arrangement (FIG. 10) and the transmission arrangement (FIG. 11) in the C-C-O-O-C-C coupling of FIG. 6(d), the detection system and the light source system are arranged on the Open focuses, and therefore, the reflected light does not return to the ellipsoidal mirror as shown in FIG. 5(b). This manner resolves the above-described (5) internal multireflection problem (inter-reflection problem) of the ellipsoidal mirror.

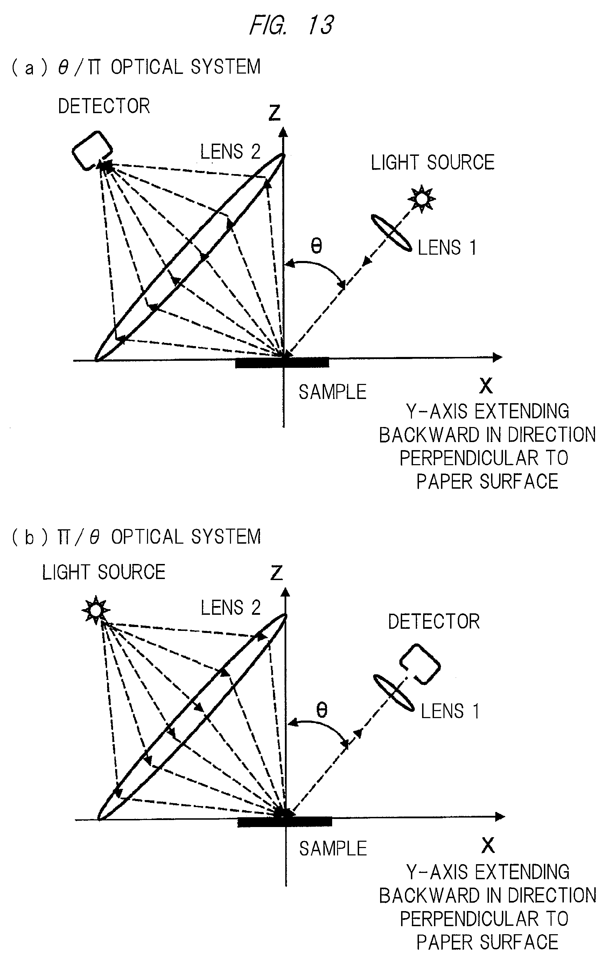

FIG. 13 (a) shows a conceptual diagram of (θ/π optical system) and FIG. 13 (b) shows a conceptual diagram of (π/θ optical system). FIG. 13 (a) shows an optical system (θ/π optical system) arrangement for measuring the scattered light scattering from the sample into a π space based on the incident light from a specific direction (at an incident angle θ). One method of achieving this optical system is the C-C-O-O-C-C couple of FIG. 6(d). Here, the light is incident in the specific direction in the incident-side optical system, and therefore, it is not required to use the basic structure configured of two quarter spheroidal mirrors (FIG. 4(a)), and besides, it is possible to use the C-C couple configured of two half-belt-shaped spheroidal mirrors of FIG. 4(c) created by cutting the quarter spheroidal mirror along two parallel planes equally distant from the primary meridian plane.

Example of a case in which the basic structure formed by using a plurality of basic elements of a major meridian/focus surrounding spheroidal mirror group formed of an ellipsoidal mirror having the same major axis and the same minor axis is a compensation structure will be described as embodiments.

### (First Embodiment)

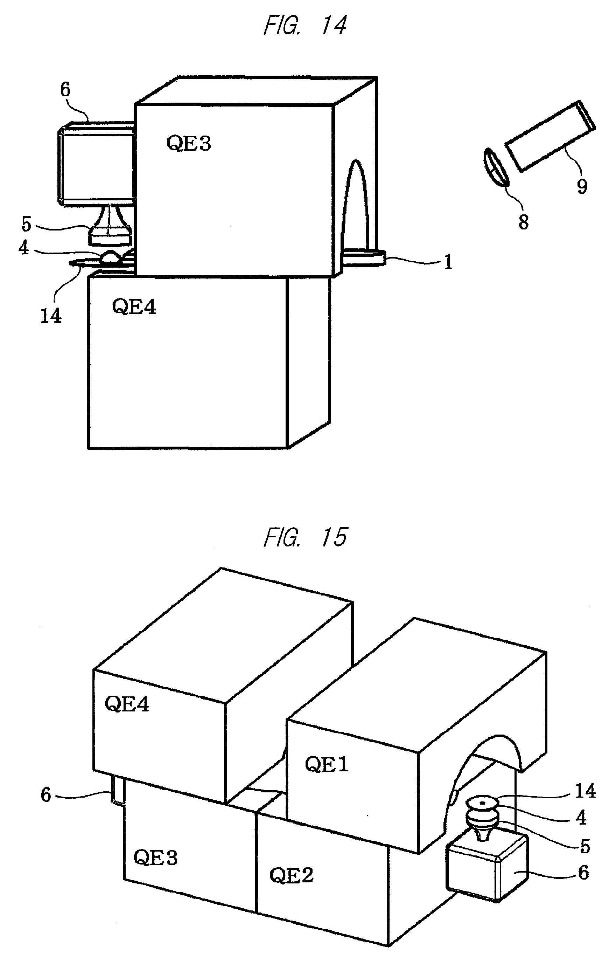

The present embodiment will hereinafter be described with reference to drawing. FIG. 14 is a schematic diagram of an optical measuring device according to the present embodiment. The device of the present embodiment is obtained by achievement of FIG. 13 (a) . In the device of the present embodiment, as shown in FIG. 6(a), two quarter spheroidal mirrors (QE3 and QE4) are C-C coupled to each other to provide a light-collecting-side spheroidal mirror in which the sample 1 is arranged on one (focus F0) of focuses on both ends and in which the detection system is arranged on the other (focus F2) of the same. In an incident-side optical system, the light is emitted onto the sample on the focus F0 while a light source 9 and a lens 8 are combined together and are moved to be goniometric in a half space, so that the detection system measures the spatial distribution such as the light emission from the sample, the diffusion reflected light, and the diffusion transmitted light with respect to a specific incident angle θ: an incident angle is equal to a zenith angle) and a specific azimuth angle (φ), and measures the light quantity of them. In the device of the present embodiment, the detection system can measure the light emitted on a quarter space (π space).

### (Second Embodiment)

The present embodiment will hereinafter be described with reference to drawing. FIG. 15 is a schematic diagram of an optical measuring device according to the present embodiment. The optical measuring device according to the present embodiment is configured of four quarter spheroidal mirrors (QE1, QE2, QE3, and QE4), and is obtained by the C-C coupling of each two of the quarter spheroidal mirrors, and besides, the O-O coupling of two sets of the C-C couple formed by the C-C coupling. One C-C couple has such a structure as being capable of rotating around the through-focus axis with respect to the other C-C couple. The sample is arranged on the common focus (F0) of this O-O couple, the detection systems are arranged on the focuses (F1 and F2) on both-side planes, respectively, so that the spatial distribution and the light quantity of the light emitted from the sample is measured. The sample is a self-emitting sample or a sample that emits light in response to an extraneous electric stimulation, photoexcitation, etc. Each of the C-C couples can measure the emitted light distribution in the quarter space (π space), and therefore, the device of the present embodiment can collectively measure the emitted light distribution in the hemisphere (2π) space.

### (Third Embodiment)

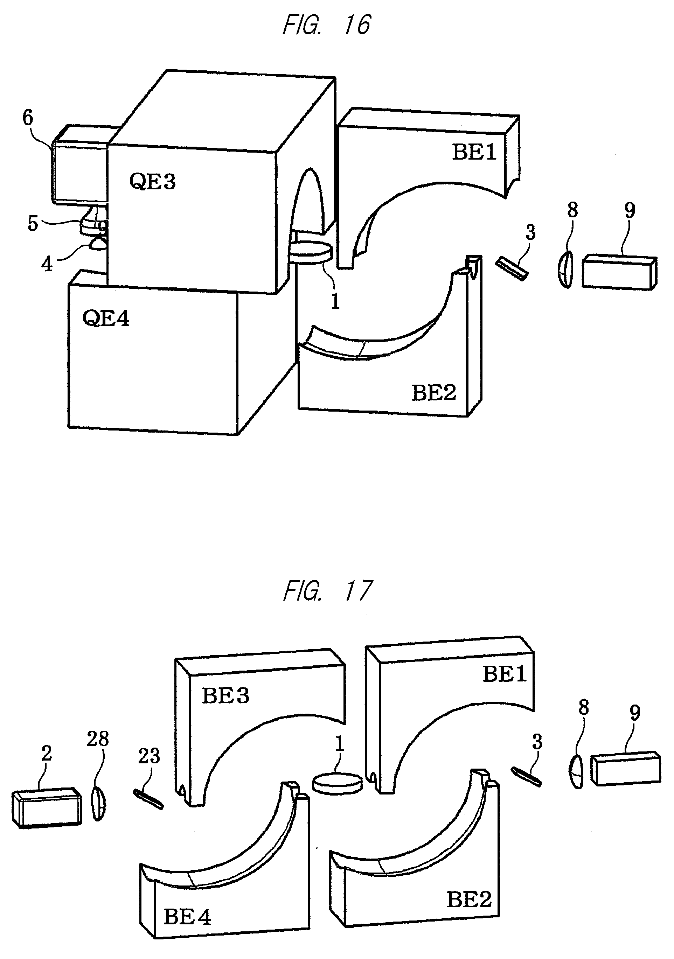

The present embodiment will hereinafter be described with reference to drawing. FIG. 16 is a schematic diagram of an optical measuring device according to the present embodiment. The optical measuring device of the present embodiment is obtained by the C-C coupling of two quarter spheroidal mirrors on the light-collecting side (to create the light-collecting-side spheroidal mirror formed of QE3 and QE4) as shown in FIG. 16. The coupling surface is referred to as the secondary meridian plane. On the incident side, two half-belt-shaped spheroidal mirrors are C-C coupled (to create an incident-side spheroidal mirror formed of BE1 and BE2). A scatterometer is configured by the O-O coupling between the two sets of the C-C couples. This has totally five focuses, and these focuses are arranged on a straight line. This straight line is referred to as the through-focus axis. The five focuses are named as the focus F1, focus F3, focus F0, focus F4, and focus F2 in an order from the incident side. The focus F1 is set to the north pole, and a rotary mirror 3 (RM1) is placed on the focus F1. The focus F2 is set to the south pole, and the detection system is placed on the focus F2. The focuses F3, F0, and F4 are the common focuses, and the sample 1 is placed on the focus F0. The focuses F3 and F4 are set to blank (empty). The primary meridian plane includes the through-focus axis and is perpendicular to the secondary meridian plane.

The C-C coupled half-belt-shaped spheroidal mirror can be rotated (χ) with respect to the C-C coupled quarter spheroidal mirror around the through-focus axis by 360 degrees or more. The C-C coupled quarter spheroidal mirror can be rotated (η) independently and freely with respect to the C-C coupled half-belt-shaped spheroidal mirror around the through-focus axis by 360 degrees or more. This rotation χ changes the azimuth angle of the incident beam onto the sample. The rotary mirror RM1 on the focus F1 can also be rotated (ϕ) independently with respect to this rotation around the focus F1 by 360 degrees or more. By this rotation ϕ, an incident angle onto the sample can be continuously changed from 0 to 90 degrees. In the drawing, note that a rotation mechanism of the spheroidal mirror is omitted. In the present embodiment, the light is caused to enter the rotary mirror (mirror RM1) 3 on the focus F1, is reflected by the rotary mirror 3, and then, the reflected light is further reflected twice by the two half-belt-shaped spheroidal mirrors (BE1 and BE2), and is emitted onto the sample on the focus F0. The emitted light from the sample, the diffusion reflected light, the diffusion transmitted light, etc., with respect to a specific incident angle (θ: an incident angle is equal to a zenith angle) are reflected twice by the two quarter spheroidal mirrors (QE3 and QE4), and are collected on the focus F2. The detection system placed on the focus F2 measures the spatial distribution and the light quantity. The detector of the present embodiment can measure an emitted light distribution in the quarter space (π space). This optical system is a θ/π measurement system (FIG. 13(a)).

### (Fourth Embodiment)

The present embodiment will hereinafter be described with reference to the drawing. FIG. 17 is a schematic diagram of an optical measuring device according to the present embodiment. The device of the present embodiment is configured of four half-belt-shaped spheroidal mirrors (BE1, BE2, BE3, and BE4), and is obtained by the C-C coupling of each two of half-belt-shaped spheroidal mirrors, and besides, the O-O coupling of the two sets of the C-C couples formed by this C-C coupling. The sample 1 is placed on the common focus (F0) in the O-O couple, the rotary mirror (RM1) 3 is placed on the focus (F1) of the incident-side spheroidal mirror of the focuses on both ends, and the detection system or a rotary mirror (RM2) 23 is placed on the focus (F2) of the light-collecting-side spheroidal mirror on the other side. The incident-side spheroidal mirror including the rotary mirror 3 has such a structure that the incident-side spheroidal mirror can be rotated around the through-focus axis by 360 degrees or more with respect to the light-collecting-side spheroidal mirror. The light-collecting-side spheroidal mirror also has such a structure that the light-collecting-side spheroidal mirror can be rotated freely and independently with respect to the incident-side spheroidal mirror by 360 degrees or more. The light from the light source 9 is caused to enter the rotary mirror (RM1 mirror) 3 on the focus F1 through the lens 8, and the light reflected by the rotary mirror 3 is reflected twice by two half-belt-shaped spheroidal mirrors (BE1 and BE2), and is emitted onto the sample on the focus F0. The emitted light from the sample 1, the total reflection light, the total transmission light, etc., based on a specific incident angle (θ: an incident angle is equal to a zenith angle) and a specific azimuth angle (φ) are reflected twice by the two light-collecting-side spheroidal mirrors (BE3 and BE4), and are collected on the focus F2. The light quantity is measured by the detection system directly placed on the focus F2 or by the detector 2 through the RM2 mirror 23 and a lens 28. In this device, the detector 2 can measure the emitted light in a specific direction.

### (Measurement Arrangement of Incident System and Detection System in Each Embodiment)

The first and third embodiments are the θ/π measurement system (FIG. 13(a)). Further, by replacing the detection system and the incident system (system configured of the light source, the lens, and the rotary mirror) with each other, the π/θ measurement system (FIG. 13(b)) is also applicable.

### (Incident-Side Optical System in Each Embodiment)

In the third and fourth embodiments, the rotary mirror on the focus F1 can be directly replaced with the light source. However, in order to reduce the influence of the multireflection (e.g., multireflection between the light source and the sample) inside the ellipsoidal mirror, it is advantageous to place the rotary mirror on the focus F1. In this manner, the multireflection between the focus F1 and the sample can be reduced.

### (Detection System in Each Embodiment)

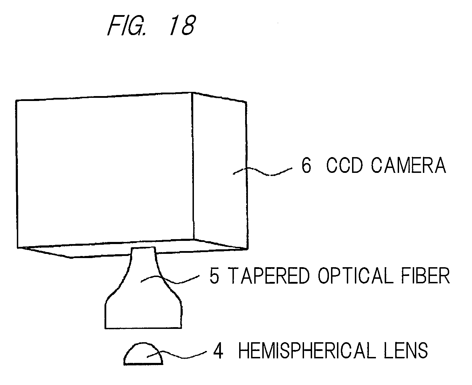

In the first, second, and third embodiments, for the detection system on the focus F2, the same configuration as that of the Patent Document 1 can be used. Examples of the detection system are shown in FIG. 18 and FIG. 5(b). The center of the hemispherical lens (HSL) 4 to which the aperture (AP) 14 is attached is set to be coincident with the focus F2, and besides, a large-diameter surface of the tapered optical fiber (OFT) 5 is set to be coincident with an image-forming surface of this lens while a small-diameter surface of the tapered optical fiber 5 is set to be coincident with a pixel surface of the CCD camera 6 (Note that the small-diameter surface of the OFT and the surface of the CCD camera are shown so as to dare to be separated from each other in FIGs. 5(a) and 5(b). for explaining the return light). In this manner, the spatial distribution of the scattered light from the sample and an intensity of the same are measured.

### (Optical Measurement by Optical Measuring Device of Each Embodiment)

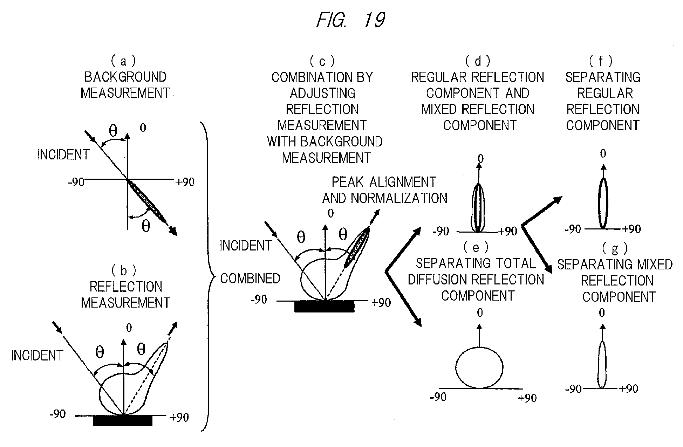

Based on measurement results measured in the first, second, and third embodiments, a method of separating the total hemispherical reflectance into the regular reflection component, the diffusion reflection component, and the mixed reflection component is shown in FIG. 19. In the drawings of FIG. 19, FIG. 19(a) is a diagram for explaining a background measurement, FIG. 19(b) is a diagram for explaining a reflection measurement, FIG. 19(c) is a diagram for explaining a step of adjustment and combination of the reflection measurement with the background measurement, FIG. 19(d) is a diagram for explaining the regular reflection component and the mixed reflection component, FIG. 19 (e) is a diagram for explaining separation of a total diffuse reflection component, FIG. 19(f) is a diagram for explaining the separation of the regular reflection component, and FIG. 19(g) is a diagram for explaining the separation of the mixed reflection component. The spatial light distribution and the light intensity at each point in each of a case of a background arrangement without the sample (without the sample in the arrangement of FIG. 11) and a case of a reflection (transmission) arrangement with the sample (FIGs. 10 and 11) are measured by the CCD camera, etc. From a ratio between total sums (QB and QR, respectively) of pixels of the CCD camera in the respective cases, the total hemispherical reflectance (THR=QR/QB) of the sample is obtained first. Next, as schematically shown in FIG. 19, by using an image already measured by the CCD camera, this total hemispherical reflectance is separated into a regular reflectance (RR), a total diffuse reflectance (DR), and a mixed reflectance (MR), based on a difference between a background light distribution and a light distribution from the sample. Similarly, the total hemispherical transmittance (THT) of the sample is separated into a regular transmittance (RT), a total diffusion transmittance (DT), and a mixed transmittance (MT).

In the present first to fourth embodiments, stray light noises can be reduced significantly more than those of a conventional technique. For example, in the measurement of reflectance of a transparent sample in a conventional regular reflectance/transmittance meter (FIG. 26), the RM2 mirror arranged at the position of the detector 2 in FIG. 26 directs this reflected light to the detector. However, the transmitted light having passed through the sample exists inside belt-shaped spheroidal mirrors of FIG. 26. In the reflection measurement, this transmitted light becomes the stray light to be noises. When the compensation structure of the present invention is used as the light-collecting-side optical system, extra transmitted light is reflected on the back of QE4 to escape into a free space in the reflection measurement arrangement, and extra reflected light is reflected on the back of QE4 to escape into a free space also in the transmission measurement arrangement as clearly seen from FIGs. 10 and 11, and therefore, the stray light does not occur.

In the first to third embodiments, a detection system of FIGs. 5(b) and 18 is used as the detection system, and the distribution of the light emitted from the sample into the π space and the intensity of the same in each direction are measured. When these detection systems are arranged as the scatterometer, the aperture (AP) is attached to the center of the flat surface of the hemispherical lens (HSL), the center is set to be coincident with the focus F2, and the aperture is arranged to be parallel to the secondary meridian plane. Because of this, the detection system does not block the beam, and therefore, the problem (4) of the ellipsoidal mirror that "the problem of the block of the beam by the optical element" can be solved.

### (Symmetry of Compensation Structure and Spatial Light Distribution Observed at Focus F2)

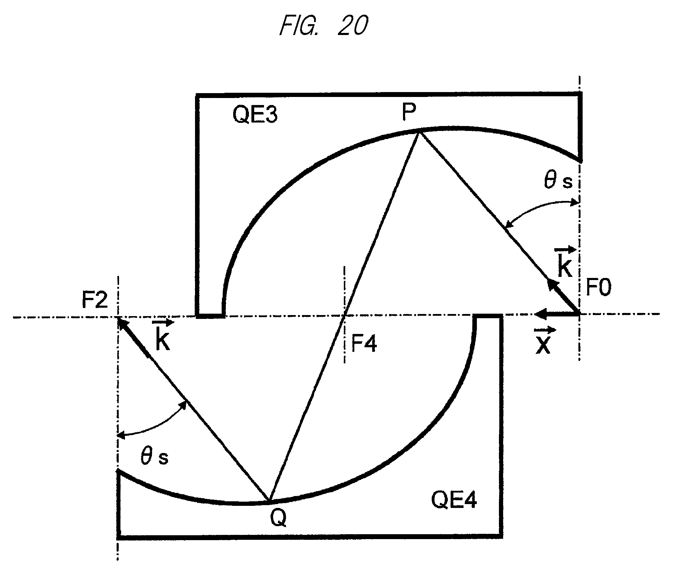

The symmetry of the compensation structure employed in the first to fourth embodiments will be considered. FIG. 20 is a diagram for explaining the symmetry of the compensation structure. The compensation structure has point symmetry with respect to its common focus (F4). Next, "a surface created by two vectors" will be considered, the vectors being the through-focus axis (which is a unit vector "x" in the X-axis direction) and a traveling direction of light emitted from the focus F0 of the sample in an arbitrary direction (which is a unit pointing vector "k"). The light emitted from the focus F0 is reflected by the spheroidal mirror QE3 (a point of this reflection is denoted as "P"), and then, always reaches the focus F4. Because the focus F4 is on the vector x, a straight line connecting the point P to the focus F4 is on the "surface created by two vectors". The light having passed through the focus F4 is reflected by the spheroidal mirror QE4 (a point of this reflection is denoted as Q), and then, always reaches the focus F2. Because the focus F2 is on the vector x, a straight line connecting the point Q to the focus F2 is on the "surface created by two vectors". As a result, a beam F0P, a beam PF4Q, and a beam QF2 are on the "surface created by two vectors". On this surface, an angle PF4F0 and an angle QF4F2 are diagonal to each other, and therefore, are equal to each other. Since the QE3 and the QE4 are of the same spheroidal mirror having the common focus F4, lengths of a side F0F4 and a side F2F4 are equal to each other. Because the common focus F4 is at a point for the point symmetry, lengths of a side PF4 and a side QF4 are equal to each other. Therefore, a triangle F0PF4 and a triangle F2QF4 become congruent with each other, and an angle F4F0P and an angle F4F2Q are equal to each other, and therefore, the unit pointing vector of the beam QF2 becomes the unit pointing vector k which is the same as that of the beam F0P that has been emitted from the focus F0 first. As a result, the focus F2 is equivalent to the focus F0, and the distribution of light from the sample into the space at the focus F0 is the same as measured at the focus F2 in the distribution of light into the space.

### (Solution to Magnification Problem)

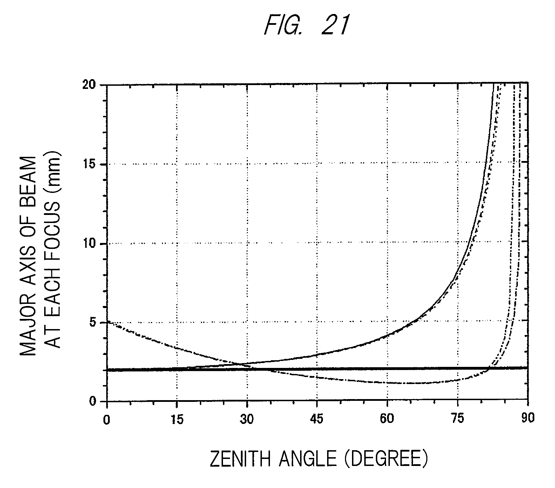

In the first to fourth embodiments, a solution to the magnification problem will be specifically described. An example of a structure in which the scattered light between the sample and the detection system is reflected the same number of times on a magnification area and a reduced area of the ellipsoidal mirror of FIG. 3 is equivalent to the basic structure of the present invention. Although an actual calculation is performed on the scatterometer of the third embodiment, the calculation applies to all the embodiments. FIG. 21 shows results of calculation of a size of a beam in the direction of the through-focus axis at all focuses on the secondary meridian plane when parallel light beam with a diameter of 2 mm is incident on the first focus F1 within the primary meridian plane in parallel with the primary meridian plane. The horizontal axis represents the zenith (incident) angle of the parallel beam which is incident ono the focus F1. A thick continuous line in the drawing represents a diameter of the incident beam. A dotted line in the drawing represents a size of the beam at the focus F1. When the beam is incident perpendicular to the secondary meridian plane, the size of the beam is 2 mm. However, as the incident angle becomes larger (more obliquely incident), the beam shape on the secondary meridian plane ovalizes more elliptical (FIG. 7), and the dotted line shows such a change of the major axis of the beam. A broken line and a continuous line in the drawing represent the results of calculation of the respective sizes of the beam at the focus F0 and the focus F2. Further, a single-dot chain line and a two-dot chain line in the drawing represent the results of calculation of the respective sizes of the beam at the focus F3 and the focus F4. The major axis of the beam at the focus F1 and the major axes of the beam at the focuses F0 and F2 show almost the same change as each other. This result solves the (1) "magnification problem" of the ellipsoidal mirror. On the other hand, the change in the beam diameters at the focuses F3 and F4 is totally different from the change (shown by the dotted line) in the beam diameter at the focus F1. The beam reaching the focuses F3 and F4 is reflected an odd number of times on the spheroidal mirror configuring the third embodiment. The magnification occurs at the focuses F3 and F4.

The above-described calculations are made to examine changes of the size of the beam in the direction of the through-focus axis at all focuses on the secondary meridian plane when the parallel light beam with the diameter of 2 mm is incident on the first focus F1 within the primary meridian plane in parallel with the primary meridian plane. Next, other calculations are made to examine change of the major axis of the beam within the secondary meridian plane caused by the magnification perpendicular to the through-focus axis (see FIG. 7) within the secondary meridian plane at all focuses when the parallel light beam with the diameter of 2 mm is incident on the first focus F1 within the same primary meridian plane in parallel with the primary meridian plane. According to the results, in the third embodiment, no magnification occurs in all zenith (incident angles).

### (Distortion of Image Observed at Focus F2)

It is considered that the distortion of an image at the focus F2 in a scatterometer using the ellipsoidal mirror is caused by (cause 1) distortion due to a different curvature at each point of the ellipsoidal mirror and (cause 2) distortion due to the magnification of the ellipsoidal mirror.

### (Cause 1: Distortion Due to Different Curvature at Each Point of Ellipsoidal mirror)

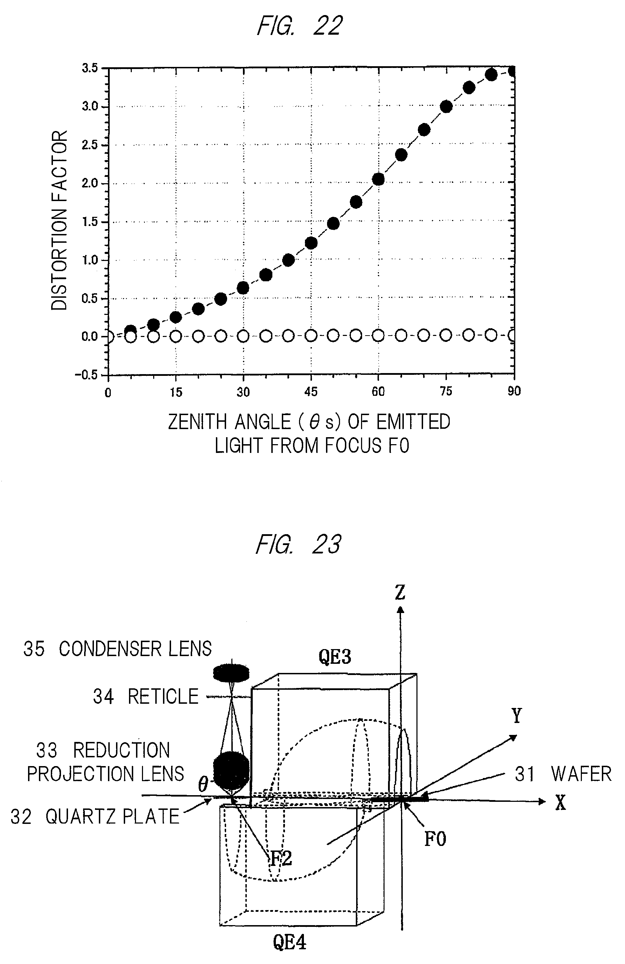

The image distortion due to the cause 1 in the first, second, and third embodiments will be reviewed in comparison with a case of a conventional scatterometer described in Patent Document 1 (see FIG. 27). First, the image distortion on the primary meridian plane will be reviewed. In order to evaluate the image distortion, it is only required to obtain how ±1 degrees (θs-1 and θs+1) before and after a beam (θs) emitted from the focus F0 of the sample in an arbitrary direction are widen (or narrowed) at the focus F2 through calculation. All of the three beams reviewed here are emitted from the F0 focus, and therefore, these beams are always reflected on the ellipsoid to reach the focus F2. At this time, angles of aperture from the reference beam are calculated by using a relational equation of an angle between the focus F0 and the focus F2 that is expressed in polar coordinates of the ellipsoid. The result of calculation of the image distortion on the primary meridian plane due to the different curvature at each point of the elliptical area is shown in FIG. 22. A distortion factor in the case of the conventional scatterometer of Patent Document 1 is shown by a black circle in FIG. 22. A similarly-calculated distortion factor in the case of the scatterometer of the third embodiment is shown by a white circle in FIG. 22. In the scatterometer of Patent Document 1 (FIG. 27), the image becomes larger (a positive distortion factor means increase in the image size) as the zenith angle (θs) of the scattered light from the sample becomes larger. On the other hand, in the scatterometer of the third embodiment, the image is not distorted. This can be clearly seen from the fact that an image observed at the focus F2 is an one-to-one erect image in a C-C couple configured of the meridian-focus surrounding ellipsoidal mirror group having the same shape as the above-described review (with regard to the symmetry of the compensation structure and the spatial light distribution observed at the focus F2).

Next, the image distortion on a surface parallel to an equatorial plane will be reviewed. In a direction perpendicular to the primary meridian plane, the images are not distorted in the scatterometer of Patent Document 1 and the scatterometer of the third embodiment.

As a result, in the conventional scatterometer of Patent Document 1 (FIG. 27), the image is distorted on the primary meridian plane but not distorted in the perpendicular direction thereto. On the other hand, in the scatterometer of the first to third embodiment, it is found that the image is not distorted in the both directions.

### (Cause 2: Distortion Due to Magnification of Ellipsoidal mirror)

The compensation structure of the present invention is used in the first, second, and third embodiments, and therefore, the magnification problem for the beam in vicinity of focuses is solved. As a result, an image is not distorted. On the other hand, in a conventional device, an image is distorted by the magnification of the ellipsoidal mirror.

### (Solution to Internal Multireflection Problem)

A possibility of occurrence of the reflected light (indicated by dotted lines in FIG. 5(b)) will be examined, the possibility being in the case of the detection system (FIG. 5(b)) formed of the hemispherical lens, the tapered optical fiber, and the CCD camera, which is exemplified as the detection system of the first, second, and third embodiments. A beam (PF2) which is incident on a flat surface "I" of the hemispherical lens is the reflected light emitted from a point "P" of the spheroidal mirror QE4. The reflected light on the flat surface I of the hemispherical lens is reflected regularly toward the direction opposite to the spheroidal mirror QE4, and therefore, does not return to the spheroidal mirror QE4. A next refection surface of the detection system is a hemispherical dome surface "II", and a part of the reflected light from this surface transmits through the flat surface I of the hemispherical lens and returns to the spheroidal mirror QE4. By applying a non-reflection coating or others to this dome surface, the reflected light on the dome surface II can be reduced. A third refection surface is the large-diameter surface "III" of the tapered optical fiber, and the reflected light from this surface proceeds toward a camera cone (which is a structure obtained by integrating the aperture, the hemispherical lens, the tapered optical fiber, and the CCD camera to unite them). Even if this reflected light reaches the dome surface II of the hemispherical lens, most of the light is reflected toward the camera cone. A returning amount of the reflected light from the third reflection surface to the spheroidal mirror QE4 is small. A fourth reflection surface is a small-diameter surface IV of the tapered optical fiber, and the light reflected on this surface returns through the tapered optical fiber, and passes through the large-diameter surface III, and then, is reflected on the dome surface II of the hemispherical lens, and most of the light is reflected toward the camera cone side, and therefore, the amount of the returning reflected light from the fourth reflection surface to the spheroidal mirror QE4 is small. The last reflection surface is a pixel surface (V) of the CCD camera. The reflection on this surface is considered to be scatter reflection, and most of the light is reflected on the dome surface II toward the camera cone side even if the light passes through the tapered optical fiber, and therefore, an influence of this reflection is small. In this manner, the above-described (5) "internal multireflection problem" of the ellipsoidal mirror is solved.

### (Solution to Misalignment Problem)

In the first to fourth embodiments, by the C-C coupling of two meridian-focus surrounding ellipsoidal mirrors, all of three focuses (F0, F1, and F2) required for alignment are located on the cross-sectional plane 1 of the ellipsoidal mirror or an intersection line between the cross-sectional planes 5 and 2 thereof as shown in FIGs. 1 and 2, and the positions of these focuses can be identified easily and accurately by measurement of the length (one-dimensional measurement of the length). Meanwhile, the focuses are conventionally searched by the measurement of the length on a two-dimensional surface, and therefore, the identification of the focus position is difficult. This manner solves the above-described (6) "misalignment problem" of the ellipsoidal mirror.

### (Measurement Example according to Device of Embodiments)

### (1) Measurement of Image Distortion

An optical measuring device of the third embodiment is used, DE1-L4100a in "diffusion plate based on an engineering method (produced by Thorlabs Inc.)", which generates diffusion transmitted light having a linear shape, is selected as the sample, and white light of a halogen lamp is used as the light source, so that an image is measured. The measurement is performed while the sample is fixed to be parallel to the secondary meridian plane and to a position at which its scattered light is in parallel to the equatorial plane. In the images using the diffusion plate, good linear shapes can be observed. A ratio between the vertical length and the horizontal length of images using the diffusion plate is measured while an incident angle is changed. When the incident angle exceeds 40 degrees, the image is compressed. This is because an image in periphery of the detection system is compressed. From this result, it is found that the light distribution of the light from the sample can be measured by such a process as considering the compression of the image in the periphery part measured by the optical measuring device of the third embodiment.

### (2) Raman Spectrometry

In the detection system of FIG. 18, the light distribution and the light intensity in the light distribution is measured by using the CCD camera without dispersing the scattered light from the sample. The spectroscopic measurement of the scattered light is enabled by removing the CCD camera and attaching one end of an optical fiber bundle to the small-diameter surface of the tapered optical fiber and the other end of the same to an incident slit of a spectrometer via a lens, etc. This arrangement enables the spectroscopic measurement of the entire scattered light emitted from the sample into the π space. When spectroscopic measurement of only the scattered light emitted in a specific direction from the sample (such as backward light scattering, forward light scattering, and right-angle light scattering) is desired, it is only required to collect the light only in a specific direction on the small-diameter surface while using a linear optical fiber bundle.

### (Fifth Embodiment)

Application examples of the optical system described in the above-described embodiments will be specifically described. As seen in FIG. 6(a) shown as the example of the basic structure, the explanation will be made in the example of the C-C couple of two major meridian/focus surrounding ellipsoidal mirror groups, specifically the example of the compensation structure obtained by the two major meridian/focus surrounding ellipsoidal mirrors having the same shape. The other structures shown in FIG. 6 are also appropriately applicable.

As already described (with regard to Image Distortion Observed at Focus F2), the optical system has characteristics that an object at the focus F0 and an image at the focus F2 form an equal-magnification erect image. As application examples utilizing the characteristics, a tip part of a semiconductor exposure apparatus, a tip part of a microscope, and others are cited.

FIG. 23 shows an example in which the optical system of the present invention is attached to a tip part of a semiconductor exposure apparatus. Conventionally, a tip end of a reduction projection lens of the semiconductor exposure apparatus and a wafer are close to each other with a gap of about 1 mm. In an immersion exposure technique, this gap is filled with a liquid (pure water, etc.). In the immersion exposure technique, it is particularly difficult to handle the liquid. For example, a stage on which the wafer is loaded repeatedly moves fast and stops quickly during an exposure operation. Even under such an operation condition, it is required to maintain the liquid in an ideal stationary state. Since vaporization heat generated by the vaporization of the liquid decreases a liquid temperature to cause an error in an exposure accuracy, it is required to find means for avoiding this problem. While using the capability of allowing the formation of the equal-magnification erect image of the above-described optical system having the C-C couple, the optical system having the C-C couple is set to the tip part of the semiconductor exposure apparatus as shown in FIG. 23. As an example of the tip part of the semiconductor exposure apparatus, a portion formed by a condenser lens 35, a reticle 34, and a reduction projection lens 33 is shown in FIG. 23. Conventionally, a semiconductor wafer is placed on the image-forming surface of the reduction projection lens 33. However, in the optical system of the present invention, the optical system of the present invention is inserted between the reduction projection lens 33 and a semiconductor wafer 31. In the optical system in the drawing, two quarter spheroidal mirrors (QE3 and QE4) are C-C coupled, the wafer 31 is placed on one focus (F0) of both ends, and the focus (F2) on the other end is matched to the image-forming surface of the reduction projection lens. When the immersion technique is performed, a quartz plate is placed on the focus F2 as a dummy sample. In this manner, the wafer is separated from the exposure apparatus, and therefore, it is easier to handle the wafer. In addition, a wide work space is generated in periphery of the wafer, and therefore, an additional approach to the wafer is possible.

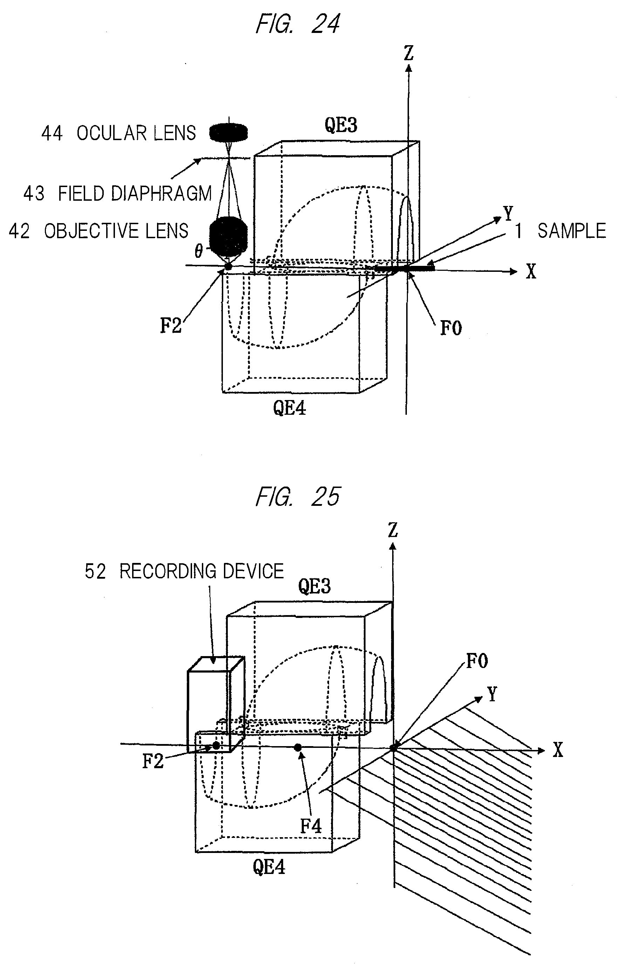

FIG. 24 shows an example in which the optical system of the present invention is set to a tip part of a microscope. In the microscope, the smaller a distance between an objective lens and a sample is, the larger and brighter a magnification factor is. However, it is difficult to bring them close to each other so often. In the optical system in the drawing, two quarter spheroidal mirrors (QE3 and QE4) are C-C coupled so that the sample 1 is placed on one focus (F0) of focuses on both ends. In an ocular lens 44, a field diaphragm 43, and an objective lens 42 configuring the tip part of the microscope, the present optical system is inserted between the objective lens 42 and the sample 1. In the set of spheroidal mirrors, an equal-magnification erect image of the object at the focus F0 can be formed at the focus F2. By matching the focus of the objective lens 42 of the microscope to the focus F2, a magnified image of the sample can be observed through the ocular lens. As clearly seen from this structure, a wide work space (the work space in this optical system is 100 mm or wider although the work space in the microscope is several mm) can be secured in periphery of the sample. The external approach to the sample becomes easier. For example, in a medical institution, a surgical site is placed on the focus F0, a doctor is able to suture fine blood vessels, nerves, etc., while checking a magnified image through a microscopic system. In the present optical system, high brightness is caused because of a large numerical aperture, and a spatial resolution in the direction of depth of the sample is higher than the conventional one by one order of magnitude because of a small focus depth.

The paired spheroidal mirrors (C-C couple, etc.) of the present optical system are point symmetrical to each other with respect to the focus F4. In this structure, as an application example using similarity to a camera lens system, (3) an image-forming system can be constructed in a reflection optical system in place of the camera lens system, and (4) the optical system can be used as a side-view mirror or rearview mirror of a vehicle etc., because the optical system has a wide field of vision.

FIG. 25 shows an example in which the optical system of the present invention is used in place of the camera lens system. In the drawing, the optical system becomes a camera capable of capturing an image of a quarter space outside the focus F0 by C-C coupling two quarter spheroidal mirrors (QE3 and QE4), setting diaphragm means on one focus (F0) of the focuses on both ends or on the focus F4, and placing a recording device 52 (a film, a sensor of a CCD camera, or an additional lens system) on or in vicinity of the other focus (F2). The ellipsoidal mirrors and the recording device are put in a dark box. When a direction distant from the optical system based on the focus F0 on the through-focus axis as a point of origin in the drawing is defined as X direction while an upward direction perpendicular to the through-focus axis is defined as Z direction, a range whose image can be captured through the diaphragm is a region where "X > 0" and "Z < 0" (slashed part), that is, a quarter space.

The present optical system has a wide field of vision as described above. Therefore, by attaching a system having the present optical system and having a CCD camera placed on the detector part of the F2 focus to a side surface or rear surface of a vehicle, a space that is conventionally a blind area can be monitored without the blind area.

In the present optical system of the present invention, an image surface on or in vicinity of the focus F2 is a non-contact area, and therefore, (5) the optical system can be also applied to a heat detector such as a motion sensor and a security sensor by setting a highly sensitive infrared detector, etc., thereto.

Examples in the above-described embodiments, etc., are described in order to easily understand the present invention, and the present invention is not limited to these embodiments.

### EXPLANATION OF REFERENCE CHARACTERS

- 1: sample
- 2: detector
- 3, 7, 23: mirror
- 4: hemispherical lens
- 5: tapered optical fiber
- 6: CCD camera
- 8, 28: lens
- 9: light source
- 11: band-shaped spheroidal mirror
- 12: quarter spheroidal mirror
- 14: aperture
- 31: wafer
- 32: quartz plate
- 33: reduction projection lens
- 34: reticle
- 35: condenser lens
- 42: objective lens
- 43: diaphragm
- 44: ocular lens
- 52: recording device
- QE: quarter spheroidal mirror
- BE: half-belt-shaped spheroidal mirror

## Claims

1. An optical measuring device **characterized by** a structure in which light emitted from a first substance is reflected by an ellipsoidal mirror two or more even times before reaching a second substance.

2. An optical measuring device, **characterized in that**
two ellipsoidal mirrors are arranged so that respective one focuses are set to a common focus while remaining other two focuses are arranged on one line so as to be opposite to each other across the common focus, and
the common focus is set to a blank, a first substance is arranged on one of the focuses, and a second substance is arranged on the other of the focuses.

3. The optical measuring device according to claim 2,
wherein each of the two ellipsoidal mirrors is an ellipsoidal mirror having either or both of a meridian plane and a focus orthogonal plane which is orthogonal to a major axis.

4. An optical measuring device comprising:
a first ellipsoidal mirror; and
a second ellipsoidal mirror, **characterized in that**
each of the first ellipsoidal mirror and the second ellipsoidal mirror includes:
a meridian plane including two focuses; and
a focus orthogonal plane which is perpendicular to a major axis connecting the two focuses of the ellipse and which passes through one focus,
when a focus distant from a vertex on the major axis of the ellipsoidal mirror is defined as a first focus while a focus close to the vertex is defined as a second focus,
the second focus of the first ellipsoidal mirror and the second focus of the second ellipsoidal mirror are arranged to coincide with each other to form a first common focus, and the first focus of the first ellipsoidal mirror and the first focus of the second ellipsoidal mirror, which do not coincide with each other, and the first common focus are arranged on a straight line.

5. An optical measuring device comprising:
a first spheroidal mirror; and
a second spheroidal mirror, **characterized in that**
each of the first spheroidal mirror and the second spheroidal mirror includes:
a meridian plane including two focuses; and
a focus orthogonal plane which is perpendicular to a major axis connecting the two focuses of the ellipse and which passes through one focus,
when a focus distant from a vertex on the major axis of the spheroidal mirror is defined as a first focus while a focus close to the vertex is defined as a second focus, the second focus of the first spheroidal mirror and the second focus of the second spheroidal mirror are arranged to coincide with each other to form a first common focus, and the first focus of the first spheroidal mirror and the first focus of the second spheroidal mirror, which do not coincide with each other, and the first common focus are arranged on a straight line.

6. The optical measuring device according to claim 5,
wherein the spheroidal mirror is a quarter spheroidal mirror or a half-belt-shaped spheroidal mirror.

7. The optical measuring device according to claim 5, comprising:
the first spheroidal mirror;
the second spheroidal mirror;
a third spheroidal mirror; and
a fourth spheroidal mirror,
wherein each of the third spheroidal mirror and the fourth spheroidal mirror includes:
a meridian plane including two focuses; and
a focus orthogonal plane which is perpendicular to a major axis connecting the two focuses of the ellipse and which passes through one focus,
when a focus distant from a vertex on the major axis of the spheroidal mirror is defined as a third focus while a focus close to the vertex is defined as a fourth focus,
the fourth focus of the third spheroidal mirror and the fourth focus of the fourth spheroidal mirror are arranged to coincide with each other to form a second common focus,
the third focus of the third spheroidal mirror and the first focus of the first or second spheroidal mirror are arranged to coincide with each other to form a third common focus, and
all focuses are linearly arranged on a through-focus axis.

8. A device comprising:
a first spheroidal mirror; and
a second spheroidal mirror, **characterized in that**
each of the first spheroidal mirror and the second spheroidal mirror includes:
a meridian plane including two focuses; and
a focus orthogonal plane which is perpendicular to a major axis connecting the two focuses of the ellipse and which passes through one focus,
when a focus distant from a vertex on the major axis of the spheroidal mirror is defined as a first focus while a focus close to the vertex is defined as a second focus,
the second focus of the first spheroidal mirror and the second focus of the second spheroidal mirror are arranged to coincide with each other to form a first common focus, and the first focus of the first spheroidal mirror and the first focus of the second spheroidal mirror, which do not coincide with each other, and the first common focus are arranged on a straight line.
